# EUROPEAN PATENT APPLICATION

(11) **EP 4 593 525 A2**
(43) Date of publication of application: **30.07.2025**
(21) Application number: 25181975.1
(22) Date of filing: 23.02.2023
(51) Int. Cl.: H04W 92/18

(54) **SIDELINK POSITIONING STATUS DETERMINATION AND REPORTING**

(30) Priority: 11.05.2022 GR 20220100389
(62) Divisional of application: 23714936.4
(71) Applicant: QUALCOMM Incorporated, San Diego, CA 92121-1714 (US)
(72) Inventor: MANOLAKOS, Alexandros, San Diego, 92121-1714 (US); KUMAR, Mukesh, San Diego, 92121-1714 (US); YERRAMALLI, Srinivas, San Diego, 92121-1714 (US)
(74) Representative: Reddie & Grose LLP

(57) **Abstract**

Disclosed are techniques for wireless communication. In an aspect, a user equipment (UE) receives a configuration of a first set of sidelink positioning reference signal (SL-PRS) resources configured for transmission by a first set of sidelink UEs including the UE and determines a sidelink transmission status of a first subset of SL-PRS resources of the first set of SL-PRS resources based on signal strength measurements of the first set of SL-PRS resources, availability information for the first set of SL-PRS resources, or both. The sidelink transmission status of a given UE may also be inferred from configuration information associated with the given UE and received at the UE.

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), enables higher data transfer speeds, greater numbers of connections, and better coverage, among other improvements. The 5G standard, according to the Next Generation Mobile Networks Alliance, is designed to provide higher data rates as compared to previous standards, more accurate positioning (e.g., based on reference signals for positioning (RS-P), such as downlink, uplink, or sidelink positioning reference signals (PRS)) and other technical enhancements.

Leveraging the increased data rates and decreased latency of 5G, among other things, device-to-device communication technologies are being implemented to support wireless communications between vehicles, between vehicles and the roadside infrastructure, between vehicles and pedestrians, between personal devices, etc.

### SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

In an aspect, a method of wireless communication performed by a user equipment (UE) includes receiving a configuration of a first set of sidelink positioning reference signal (SL-PRS) resources configured for transmission by a first set of sidelink UEs including the UE; and determining a sidelink transmission status of a first subset of SL-PRS resources of the first set of SL-PRS resources based on signal strength measurements of the first set of SL-PRS resources, availability information for the first set of SL-PRS resources, or both.

In an aspect, a method of wireless communication performed by a user equipment (UE) includes receiving configuration information associated with a location-based discontinuous reception (DRX) mode; obtaining a location of the UE; and transmitting, based on the location, sidelink positioning reference signals (SL-PRS) while in an inactive state of the location-based DRX mode.

In an aspect, a method of wireless communication performed by a user equipment (UE) includes receiving a request to transmit on-demand sidelink position reference signals (SL-PRS) with a time period during which the UE is requested to transmit the on-demand SL-PRS; refraining from transmitting, receiving, or both, over transmission channels, receive channels, or both, that collide with the requested on-demand SL-PRS; and transmitting the requested on-demand SL-PRS.

In an aspect, a user equipment (UE) includes a memory; at least one transceiver; and at least one processor communicatively coupled to the memory and the at least one transceiver, the at least one processor configured to: receive, via the at least one transceiver, a configuration of a first set of sidelink positioning reference signal (SL-PRS) resources configured for transmission by a first set of sidelink UEs; and determine a sidelink transmission status of a first subset of SL-PRS resources of the first set of SL-PRS resources based on signal strength measurements of the first set of SL-PRS resources, availability information of the first set of SL-PRS resources, or both.

In an aspect, a user equipment (UE) includes a memory; at least one transceiver; and at least one processor communicatively coupled to the memory and the at least one transceiver, the at least one processor configured to: receive, via the at least one transceiver, configuration information associated with a location-based discontinuous reception (DRX) mode; obtain a location of the UE; and transmit, via the at least one transceiver, based on the location, sidelink positioning reference signals (SL-PRS) while in an inactive state of the location-based DRX mode.

In an aspect, a user equipment (UE) includes a memory; at least one transceiver; and at least one processor communicatively coupled to the memory and the at least one transceiver, the at least one processor configured to: receive, via the at least one transceiver, a request to transmit on-demand sidelink position reference signals (SL-PRS) with a time period during which the UE is requested to transmit the on-demand SL-PRS; refrain from transmitting, receiving, or both, over transmission channels, receive channels, or both, that collide with the requested on-demand SL-PRS; and transmit, via the at least one transceiver, the requested SL-PRS.

In an aspect, a user equipment (UE) includes means for receiving a configuration of a first set of sidelink positioning reference signal (SL-PRS) resources configured for transmission by a first set of sidelink UEs; and means for determining a sidelink transmission status of a first subset of SL-PRS resources based on signal strength measurements of the first set of SL-PRS resources, availability information of the first set of SL-PRS resources, or both.

In an aspect, a user equipment (UE) includes means for receiving configuration information associated with a location-based discontinuous reception (DRX) mode; means for obtaining a location of the UE; and means for transmitting, based on the location, sidelink positioning reference signals (SL-PRS) while in an inactive state of the location-based DRX mode.

In an aspect, a user equipment (UE) includes means for receiving a request to transmit on-demand sidelink position reference signals (SL-PRS) with a time period during which the UE is requested to transmit the on-demand SL-PRS; means for refraining from transmitting, receiving, or both, over transmission channels, receive channels, or both, that collide with the requested on-demand SL-PRS; and means for transmitting the requested on-demand SL-PRS.

In an aspect, a non-transitory computer-readable medium stores computer-executable instructions that, when executed by a user equipment (UE), cause the UE to: receive a configuration of a first set of sidelink positioning reference signal (SL-PRS) resources configured for transmission by a first set of sidelink UEs; and determine a sidelink transmission status of a first subset of SL-PRS resources based on signal strength measurements of the first set of SL-PRS resources, availability information of the first set of SL-PRS resources, or both.

In an aspect, a non-transitory computer-readable medium stores computer-executable instructions that, when executed by a user equipment (UE), cause the UE to: receive configuration information associated with a location-based discontinuous reception (DRX) mode; obtain a location of the UE; and transmit, based on the location, sidelink positioning reference signals (SL-PRS) while in an inactive state of the location-based DRX mode.

In an aspect, a non-transitory computer-readable medium stores computer-executable instructions that, when executed by a user equipment (UE), cause the UE to: receive a request to transmit on-demand sidelink position reference signals (SL-PRS) with a time period during which the UE is requested to transmit the on-demand SL-PRS; refrain from transmitting, receiving, or both, over transmission channels, receive channels, or both, that collide with the requested on-demand SL-PRS; and transmit the requested on-demand SL-PRS.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A, 2B, and 2C illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIG. 4 illustrates an example wireless communication system in which a vehicle user equipment (V-UE) is exchanging ranging signals with a roadside unit (RSU) and another V-UE, according to aspects of the disclosure.
FIG. 5 illustrates examples of various positioning methods supported in New Radio (NR), according to aspects of the disclosure.
FIGS. 6A and 6B illustrate various scenarios of interest for sidelink-only or joint Uu and sidelink positioning, according to aspects of the disclosure.
FIG. 7 is a diagram illustrating an example frame structure, according to aspects of the disclosure.
FIGS. 8A and 8B are diagrams of example sidelink slot structures with and without feedback resources, according to aspects of the disclosure.
FIG. 9 is a diagram illustrating an example resource pool for positioning within a sidelink resource pool, according to aspects of the disclosure.
FIG. 10 is a diagram illustrating example processes for scheduling sidelink resources, according to aspects of the disclosure.
FIG. 11 illustrates an example scenario for sidelink activity, according to aspects of the disclosure.
FIGS. 12A to 12C illustrate example discontinuous reception (DRX) configurations, according to aspects of the disclosure.
FIG. 13 is a diagram illustrating an example of a positioning method with DRX, according to aspects of the disclosure.
FIG. 14 is a diagram of an example connection scenario of devices near a radio unit, according to aspects of the disclosure.
FIGS. 15-17 illustrate example methods of wireless communication, according to aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE), "vehicle UE" (V-UE), "pedestrian UE" (P-UE), and "base station" are not intended to be specific or otherwise limited to any particular radio access technology (RAT), unless otherwise noted. In general, a UE may be any wireless communication device (e.g., vehicle on-board computer, vehicle navigation device, mobile phone, router, tablet computer, laptop computer, asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as a "mobile device," an "access terminal" or "AT," a "client device," a "wireless device," a "subscriber device," a "subscriber terminal," a "subscriber station," a "user terminal" or UT, a "mobile terminal," a "mobile station," or variations thereof.

A V-UE is a type of UE and may be any in-vehicle wireless communication device, such as a navigation system, a warning system, a heads-up display (HUD), an on-board computer, an in-vehicle infotainment system, an automated driving system (ADS), an advanced driver assistance system (ADAS), etc. Alternatively, a V-UE may be a portable wireless communication device (e.g., a cell phone, tablet computer, etc.) that is carried by the driver of the vehicle or a passenger in the vehicle. The term "V-UE" may refer to the in-vehicle wireless communication device or the vehicle itself, depending on the context. A P-UE is a type of UE and may be a portable wireless communication device that is carried by a pedestrian (i.e., a user that is not driving or riding in a vehicle). Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on Institute of Electrical and Electronics Engineers (IEEE) 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs including supporting data, voice and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference RF signals to UEs to be measured by the UEs and/or may receive and measure signals transmitted by the UEs. Such base stations may be referred to as positioning beacons (e.g., when transmitting RF signals to UEs) and/or as location measurement units (e.g., when receiving and measuring RF signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

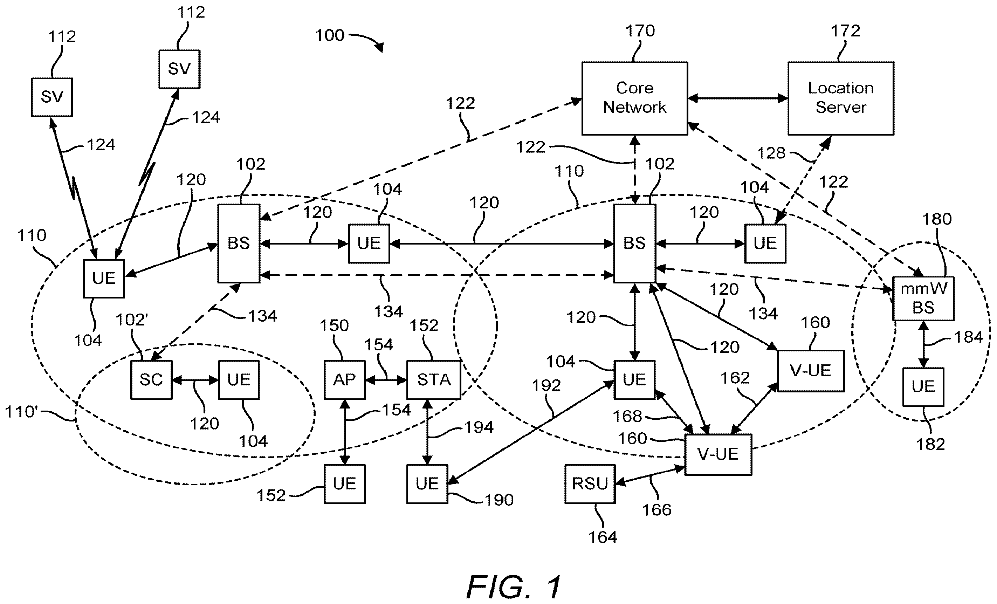

FIG. 1 illustrates an example wireless communications system 100, according to aspects of the disclosure. The wireless communications system 100 (which may also be referred to as a wireless wide area network (WWAN)) may include various base stations 102 (labelled "BS") and various UEs 104. The base stations 102 may include macro cell base stations (high power cellular base stations) and/or small cell base stations (low power cellular base stations). In an aspect, the macro cell base stations 102 may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both the logical communication entity and the base station that supports it, depending on the context. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labelled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a mmW base station 180 that may operate in millimeter wave (mmW) frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

Leveraging the increased data rates and decreased latency of NR, among other things, vehicle-to-everything (V2X) communication technologies are being implemented to support intelligent transportation systems (ITS) applications, such as wireless communications between vehicles (vehicle-to-vehicle (V2V)), between vehicles and the roadside infrastructure (vehicle-to-infrastructure (V2I)), and between vehicles and pedestrians (vehicle-to-pedestrian (V2P)). The goal is for vehicles to be able to sense the environment around them and communicate that information to other vehicles, infrastructure, and personal mobile devices. Such vehicle communication will enable safety, mobility, and environmental advancements that current technologies are unable to provide. Once fully implemented, the technology is expected to reduce unimpaired vehicle crashes by 80%.

Still referring to FIG. 1, the wireless communications system 100 may include multiple V-UEs 160 that may communicate with base stations 102 over communication links 120 using the Uu interface (i.e., the air interface between a UE and a base station). V-UEs 160 may also communicate directly with each other over a wireless sidelink 162, with a roadside unit (RSU) 164 (a roadside access point) over a wireless sidelink 166, or with sidelink-capable UEs 104 over a wireless sidelink 168 using the PC5 interface (i.e., the air interface between sidelink-capable UEs). A wireless sidelink (or just "sidelink") is an adaptation of the core cellular (e.g., LTE, NR) standard that allows direct communication between two or more UEs without the communication needing to go through a base station. Sidelink communication may be unicast or multicast, and may be used for device-to-device (D2D) media-sharing, V2V communication, V2X communication (e.g., cellular V2X (cV2X) communication, enhanced V2X (eV2X) communication, etc.), emergency rescue applications, etc. One or more of a group of V-UEs 160 utilizing sidelink communications may be within the geographic coverage area 110 of a base station 102. Other V-UEs 160 in such a group may be outside the geographic coverage area 110 of a base station 102 or be otherwise unable to receive transmissions from a base station 102. In some cases, groups of V-UEs 160 communicating via sidelink communications may utilize a one-to-many (1:M) system in which each V-UE 160 transmits to every other V-UE 160 in the group. In some cases, a base station 102 facilitates the scheduling of resources for sidelink communications. In other cases, sidelink communications are carried out between V-UEs 160 without the involvement of a base station 102.

In an aspect, the sidelinks 162, 166, 168 may operate over a wireless communication medium of interest, which may be shared with other wireless communications between other vehicles and/or infrastructure access points, as well as other RATs. A "medium" may be composed of one or more time, frequency, and/or space communication resources (e.g., encompassing one or more channels across one or more carriers) associated with wireless communication between one or more transmitter / receiver pairs.

In an aspect, the sidelinks 162, 166, 168 may be cV2X links. A first generation of cV2X has been standardized in LTE, and the next generation is expected to be defined in NR. cV2X is a cellular technology that also enables device-to-device communications. In the U.S. and Europe, cV2X is expected to operate in the licensed ITS band in sub-6GHz. Other bands may be allocated in other countries. Thus, as a particular example, the medium of interest utilized by sidelinks 162, 166, 168 may correspond to at least a portion of the licensed ITS frequency band of sub-6GHz. However, the present disclosure is not limited to this frequency band or cellular technology.

In an aspect, the sidelinks 162, 166, 168 may be dedicated short-range communications (DSRC) links. DSRC is a one-way or two-way short-range to medium-range wireless communication protocol that uses the wireless access for vehicular environments (WAVE) protocol, also known as IEEE 802.11p, for V2V, V2I, and V2P communications. IEEE 802.11p is an approved amendment to the IEEE 802.11 standard and operates in the licensed ITS band of 5.9 GHz (5.85-5.925 GHz) in the U.S. In Europe, IEEE 802.11p operates in the ITS G5A band (5.875 - 5.905 MHz). Other bands may be allocated in other countries. The V2V communications briefly described above occur on the Safety Channel, which in the U.S. is typically a 10 MHz channel that is dedicated to the purpose of safety. The remainder of the DSRC band (the total bandwidth is 75 MHz) is intended for other services of interest to drivers, such as road rules, tolling, parking automation, etc. Thus, as a particular example, the mediums of interest utilized by sidelinks 162, 166, 168 may correspond to at least a portion of the licensed ITS frequency band of 5.9 GHz.

Alternatively, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.11x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Communications between the V-UEs 160 are referred to as V2V communications, communications between the V-UEs 160 and the one or more RSUs 164 are referred to as V2I communications, and communications between the V-UEs 160 and one or more UEs 104 (where the UEs 104 are P-UEs) are referred to as V2P communications. The V2V communications between V-UEs 160 may include, for example, information about the position, speed, acceleration, heading, and other vehicle data of the V-UEs 160. The V2I information received at a V-UE 160 from the one or more RSUs 164 may include, for example, road rules, parking automation information, etc. The V2P communications between a V-UE 160 and a UE 104 may include information about, for example, the position, speed, acceleration, and heading of the V-UE 160 and the position, speed (e.g., where the UE 104 is carried by a user on a bicycle), and heading of the UE 104.

Note that although FIG. 1 only illustrates two of the UEs as V-UEs (V-UEs 160), any of the illustrated UEs (e.g., UEs 104, 152, 182, 190) may be V-UEs. In addition, while only the V-UEs 160 and a single UE 104 have been illustrated as being connected over a sidelink, any of the UEs illustrated in FIG. 1, whether V-UEs, P-UEs, etc., may be capable of sidelink communication. Further, although only UE 182 was described as being capable of beam forming, any of the illustrated UEs, including V-UEs 160, may be capable of beam forming. Where V-UEs 160 are capable of beam forming, they may beam form towards each other (i.e., towards other V-UEs 160), towards RSUs 164, towards other UEs (e.g., UEs 104, 152, 182, 190), etc. Thus, in some cases, V-UEs 160 may utilize beamforming over sidelinks 162, 166, and 168.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on. As another example, the D2D P2P links 192 and 194 may be sidelinks, as described above with reference to sidelinks 162, 166, and 168.

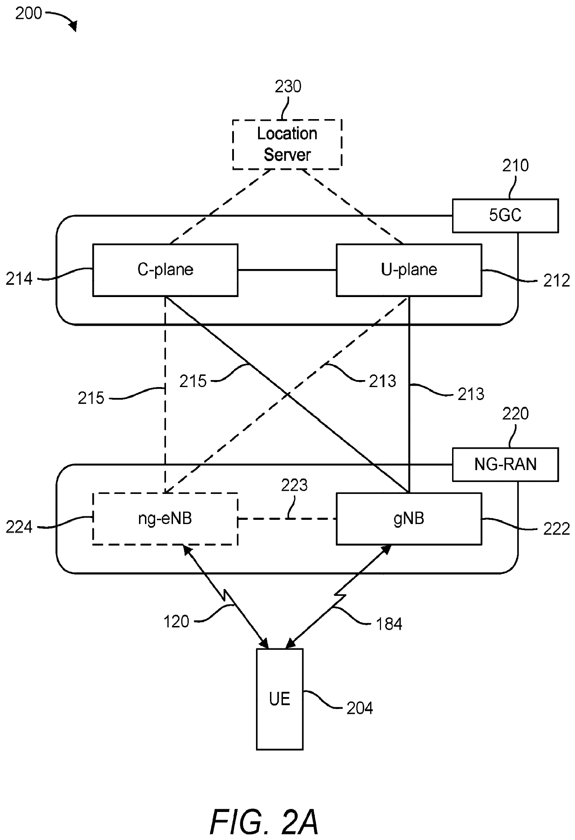

FIG. 2A illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

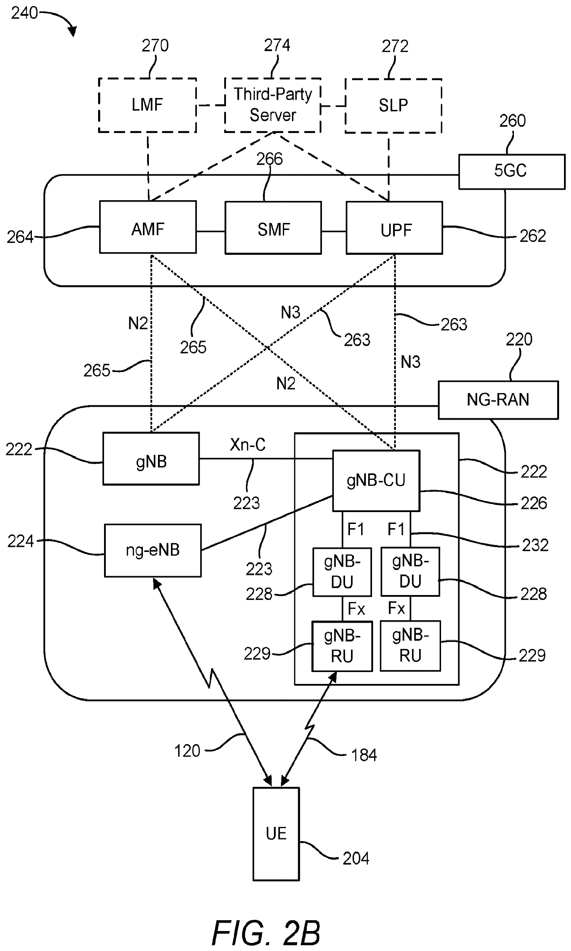

FIG. 2B illustrates another example wireless network structure 240. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (e.g., third-party server 274) over a user plane (e.g., using protocols intended to carry voice and/or data like the transmission control protocol (TCP) and/or IP).

Yet another optional aspect may include a third-party server 274, which may be in communication with the LMF 270, the SLP 272, the 5GC 260 (e.g., via the AMF 264 and/or the UPF 262), the NG-RAN 220, and/or the UE 204 to obtain location information (e.g., a location estimate) for the UE 204. As such, in some cases, the third-party server 274 may be referred to as a location services (LCS) client or an external client. The third-party server 274 can be implemented as a plurality of separate servers (e.g., physically separate servers, different software modules on a single server, different software modules spread across multiple physical servers, etc.), or alternately may each correspond to a single server.

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 may be divided between a gNB central unit (gNB-CU) 226, one or more gNB distributed units (gNB-DUs) 228, and one or more gNB radio units (gNB-RUs) 229. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 generally host the radio resource control (RRC), service data adaptation protocol (SDAP), and packet data convergence protocol (PDCP) protocols of the gNB 222. A gNB-DU 228 is a logical node that generally hosts the radio link control (RLC) and medium access control (MAC) layer of the gNB 222. Its operation is controlled by the gNB-CU 226. One gNB-DU 228 can support one or more cells, and one cell is supported by only one gNB-DU 228. The interface 232 between the gNB-CU 226 and the one or more gNB-DUs 228 is referred to as the "F1" interface. The physical (PHY) layer functionality of a gNB 222 is generally hosted by one or more standalone gNB-RUs 229 that perform functions such as power amplification and signal transmission/reception. The interface between a gNB-DU 228 and a gNB-RU 229 is referred to as the "Fx" interface. Thus, a UE 204 communicates with the gNB-CU 226 via the RRC, SDAP, and PDCP layers, with a gNB-DU 228 via the RLC and MAC layers, and with a gNB-RU 229 via the PHY layer.

Deployment of communication systems, such as 5G NR systems, may be arranged in multiple manners with various components or constituent parts. In a 5G NR system, or network, a network node, a network entity, a mobility element of a network, a RAN node, a core network node, a network element, or a network equipment, such as a base station, or one or more units (or one or more components) performing base station functionality, may be implemented in an aggregated or disaggregated architecture. For example, a base station (such as a Node B (NB), evolved NB (eNB), NR base station, 5G NB, access point (AP), a transmit receive point (TRP), or a cell, etc.) may be implemented as an aggregated base station (also known as a standalone base station or a monolithic base station) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual central unit (VCU), a virtual distributed unit (VDU), or a virtual radio unit (VRU).

Base station-type operation or network design may consider aggregation characteristics of base station functionality. For example, disaggregated base stations may be utilized in an integrated access backhaul (IAB) network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

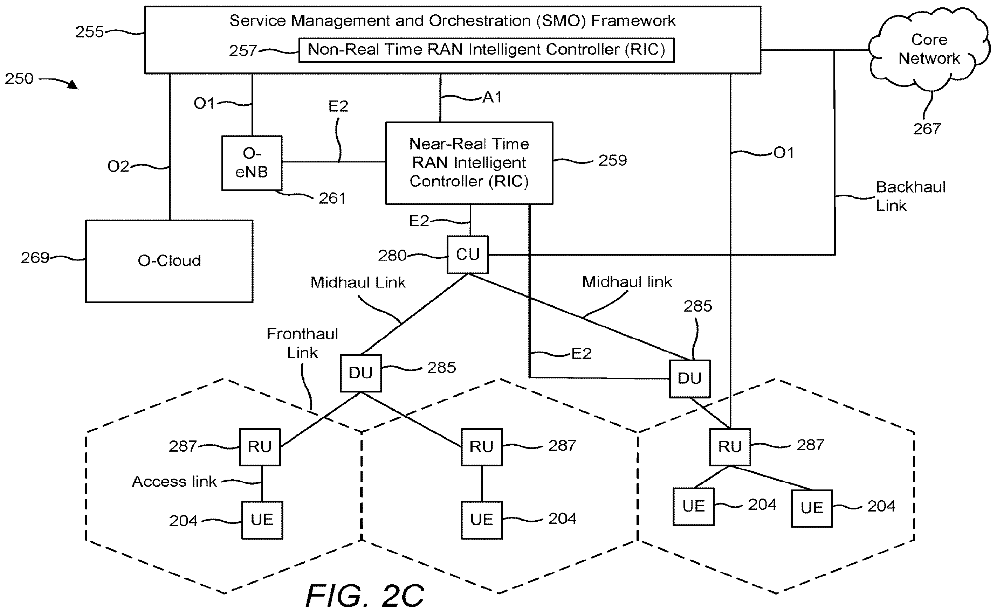

FIG. 2C is a diagram illustrating an example disaggregated base station architecture, according to aspects of the disclosure. The disaggregated base station architecture 250 may include one or more central units (CUs) 280 (e.g., gNB-CU 226) that can communicate directly with a core network 267 (e.g., 5GC 210, 5GC 260) via a backhaul link, or indirectly with the core network 267 through one or more disaggregated base station units (such as a Near-Real Time (Near-RT) RAN Intelligent Controller (RIC) 259 via an E2 link, or a Non-Real Time (Non-RT) RIC 257 associated with a Service Management and Orchestration (SMO) Framework 255, or both). A CU 280 may communicate with one or more distributed units (DUs) 285 (e.g., gNB-DUs 228) via respective midhaul links, such as an F1 interface. The DUs 285 may communicate with one or more radio units (RUs) 287 (e.g., gNB-RUs 229) via respective fronthaul links. The RUs 287 may communicate with respective UEs 204 via one or more radio frequency (RF) access links. In some implementations, the UE 204 may be simultaneously served by multiple RUs 287.

Each of the units, i.e., the CUs 280, the DUs 285, the RUs 287, as well as the Near-RT RICs 259, the Non-RT RICs 257 and the SMO Framework 255, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as a radio frequency (RF) transceiver), configured to receive or transmit signals, or both, over a wireless transmission medium to one or more of the other units.

In some aspects, the CU 280 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 280. The CU 280 may be configured to handle user plane functionality (i.e., Central Unit - User Plane (CU-UP)), control plane functionality (i.e., Central Unit - Control Plane (CU-CP)), or a combination thereof. In some implementations, the CU 280 can be logically split into one or more CU-UP units and one or more CU-CP units. The CU-UP unit can communicate bidirectionally with the CU-CP unit via an interface, such as the E1 interface when implemented in an O-RAN configuration. The CU 280 can be implemented to communicate with the DU 285, as necessary, for network control and signaling.

The DU 285 may correspond to a logical unit that includes one or more base station functions to control the operation of one or more RUs 287. In some aspects, the DU 285 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3rd Generation Partnership Project (3GPP). In some aspects, the DU 285 may further host one or more low PHY layers. Each layer (or module) can be implemented with an interface configured to communicate signals with other layers (and modules) hosted by the DU 285, or with the control functions hosted by the CU 280.

Lower-layer functionality can be implemented by one or more RUs 287. In some deployments, an RU 287, controlled by a DU 285, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 287 can be implemented to handle over the air (OTA) communication with one or more UEs 204. In some implementations, real-time and non-real-time aspects of control and user plane communication with the RU(s) 287 can be controlled by the corresponding DU 285. In some scenarios, this configuration can enable the DU(s) 285 and the CU 280 to be implemented in a cloud-based RAN architecture, such as a vRAN architecture.

The SMO Framework 255 may be configured to support RAN deployment and provisioning of non-virtualized and virtualized network elements. For non-virtualized network elements, the SMO Framework 255 may be configured to support the deployment of dedicated physical resources for RAN coverage requirements which may be managed via an operations and maintenance interface (such as an O1 interface). For virtualized network elements, the SMO Framework 255 may be configured to interact with a cloud computing platform (such as an open cloud (O-Cloud) 269) to perform network element life cycle management (such as to instantiate virtualized network elements) via a cloud computing platform interface (such as an O2 interface). Such virtualized network elements can include, but are not limited to, CUs 280, DUs 285, RUs 287 and Near-RT RICs 259. In some implementations, the SMO Framework 255 can communicate with a hardware aspect of a 4G RAN, such as an open eNB (O-eNB) 261, via an O1 interface. Additionally, in some implementations, the SMO Framework 255 can communicate directly with one or more RUs 287 via an O1 interface. The SMO Framework 255 also may include a Non-RT RIC 257 configured to support functionality of the SMO Framework 255.

The Non-RT RIC 257 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 259. The Non-RT RIC 257 may be coupled to or communicate with (such as via an A1 interface) the Near-RT RIC 259. The Near-RT RIC 259 may be configured to include a logical function that enables near-real-time control and optimization of RAN elements and resources via data collection and actions over an interface (such as via an E2 interface) connecting one or more CUs 280, one or more DUs 285, or both, as well as an O-eNB, with the Near-RT RIC 259.

In some implementations, to generate AI/ML models to be deployed in the Near-RT RIC 259, the Non-RT RIC 257 may receive parameters or external enrichment information from external servers. Such information may be utilized by the Near-RT RIC 259 and may be received at the SMO Framework 255 or the Non-RT RIC 257 from non-network data sources or from network functions. In some examples, the Non-RT RIC 257 or the Near-RT RIC 259 may be configured to tune RAN behavior or performance. For example, the Non-RT RIC 257 may monitor long-term trends and patterns for performance and employ AI/ML models to perform corrective actions through the SMO Framework 255 (such as reconfiguration via O1) or via creation of RAN management policies (such as A1 policies).

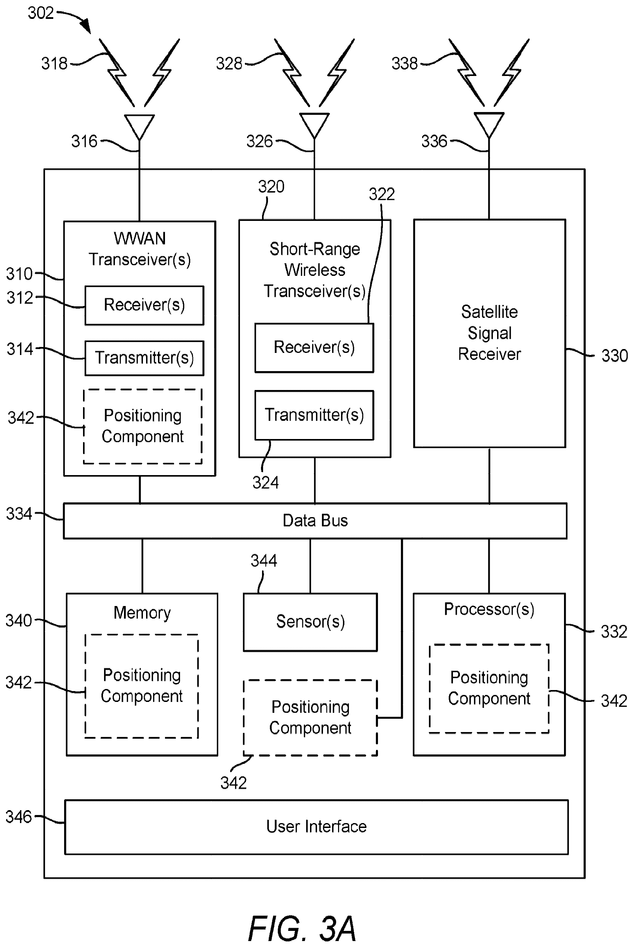

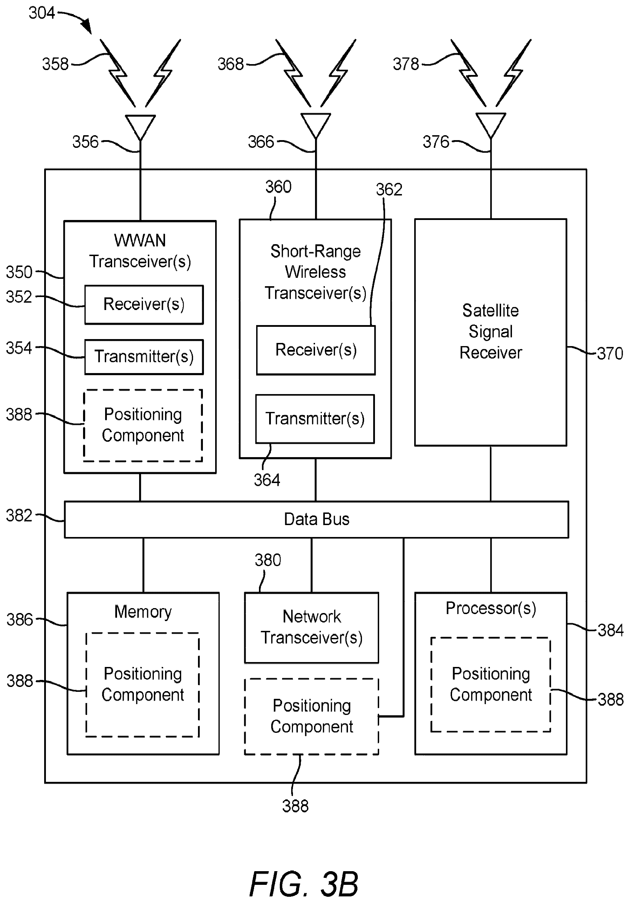

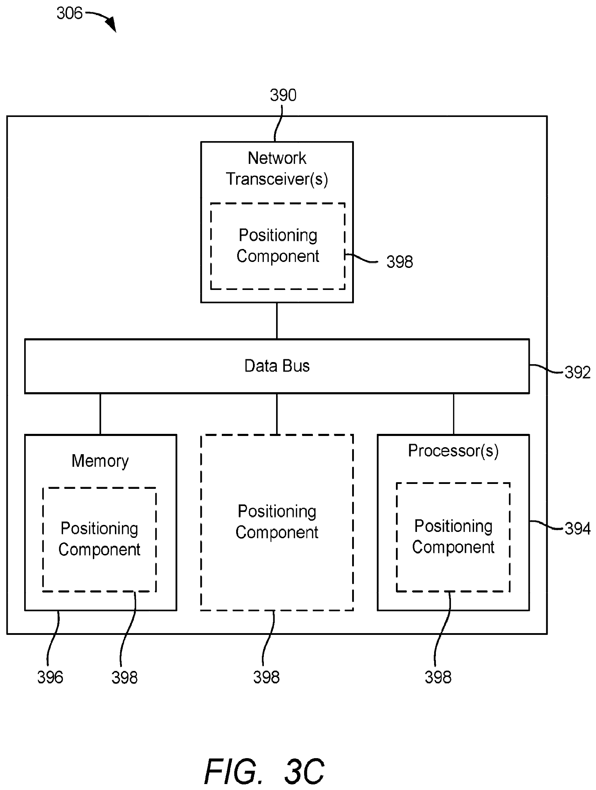

FIGS. 3A, 3B, and 3C illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the operations described herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include positioning components 342, 388, and 398, respectively. The positioning components 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the positioning components 342, 388, and 398 may be external to the processors 332, 384, and 394 (e.g., part of a modem processing system, integrated with another processing system, etc.). Alternatively, the positioning components 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the positioning component 342, which may be, for example, part of the one or more WWAN transceivers 310, the memory 340, the one or more processors 332, or any combination thereof, or may be a standalone component. FIG. 3B illustrates possible locations of the positioning component 388, which may be, for example, part of the one or more WWAN transceivers 350, the memory 386, the one or more processors 384, or any combination thereof, or may be a standalone component. FIG. 3C illustrates possible locations of the positioning component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the uplink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the positioning components 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

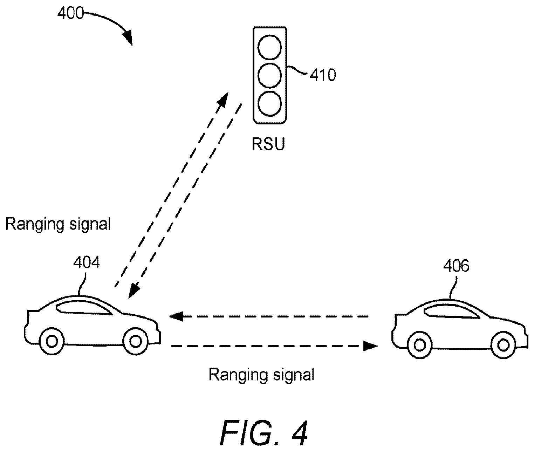

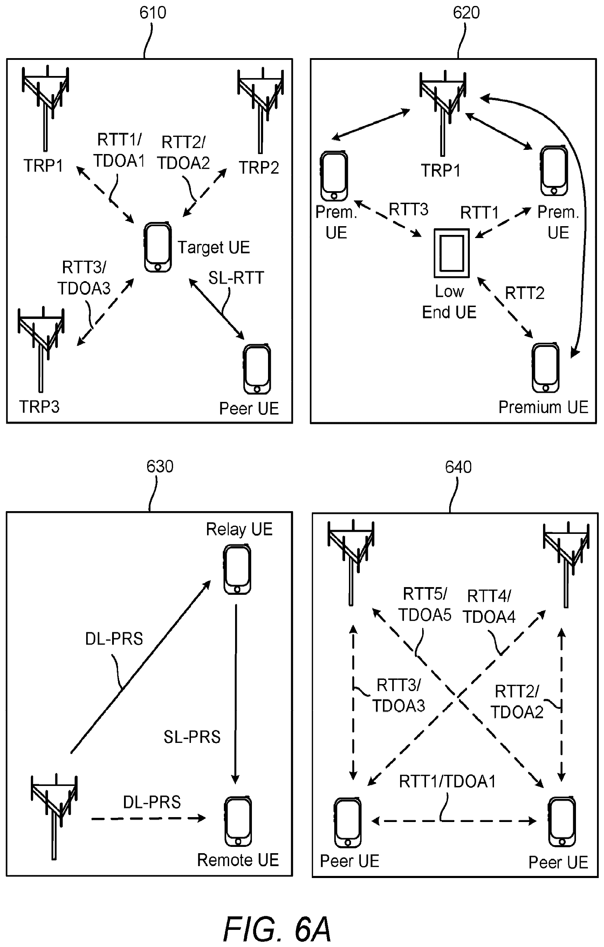

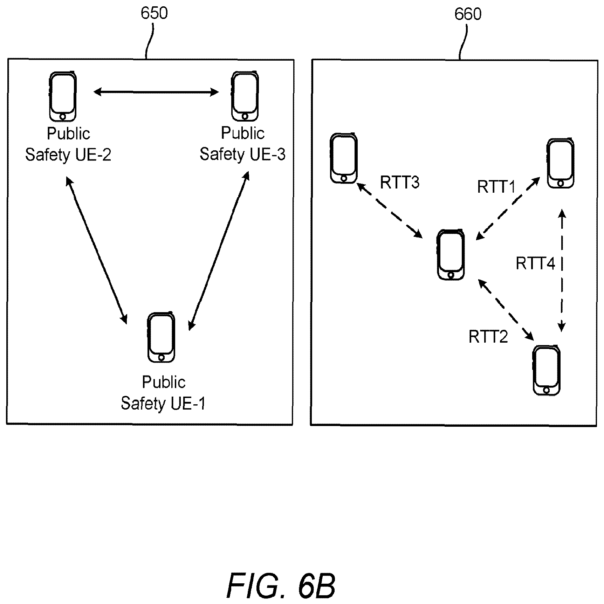

FIG. 4 illustrates an example wireless communication system 400 in which a V-UE 404 is exchanging ranging signals with an RSU 410 and another V-UE 406, according to aspects of the disclosure. As illustrated in FIG. 6, a wideband (e.g., FR1) ranging signal (e.g., a Zadoff Chu sequence) is transmitted by both end points (e.g., V-UE 404 and RSU 410 and V-UE 404 and V-UE 406). In an aspect, the ranging signals may be sidelink positioning reference signals (SL-PRS) transmitted by the involved V-UEs 404 and 406 on uplink resources. On receiving a ranging signal from a transmitter (e.g., V-UE 404), the receiver (e.g., RSU 410 and/or V-UE 406) responds by sending a ranging signal that includes a measurement of the difference between the reception time of the ranging signal and the transmission time of the response ranging signal, referred to as the reception-to-transmission (Rx-Tx) time difference measurement of the receiver.

Upon receiving the response ranging signal, the transmitter (or other positioning entity) can calculate the RTT between the transmitter and the receiver based on the receiver's Rx-Tx time difference measurement and a measurement of the difference between the transmission time of the first ranging signal and the reception time of the response ranging signal (referred to as the transmission-to-reception (Tx-Rx) time difference measurement of the transmitter). The transmitter (or other positioning entity) uses the RTT and the speed of light to estimate the distance between the transmitter and the receiver. If one or both of the transmitter and receiver are capable of beamforming, the angle between the V-UEs 604 and 606 may also be able to be determined. In addition, if the receiver provides its global positioning system (GPS) location in the response ranging signal, the transmitter (or other positioning entity) may be able to determine an absolute location of the transmitter, as opposed to a relative location of the transmitter with respect to the receiver.

As will be appreciated, ranging accuracy improves with the bandwidth of the ranging signals. Specifically, a higher bandwidth can better separate the different multipaths of the ranging signals.

Note that this positioning procedure assumes that the involved V-UEs are time-synchronized (i.e., their system frame time is the same as, or has a known offset relative to, the other V-UE(s)). In addition, although FIG. 4 illustrates two V-UEs, as will be appreciated, they need not be V-UEs, and may instead be any other type of UE capable of sidelink communication.

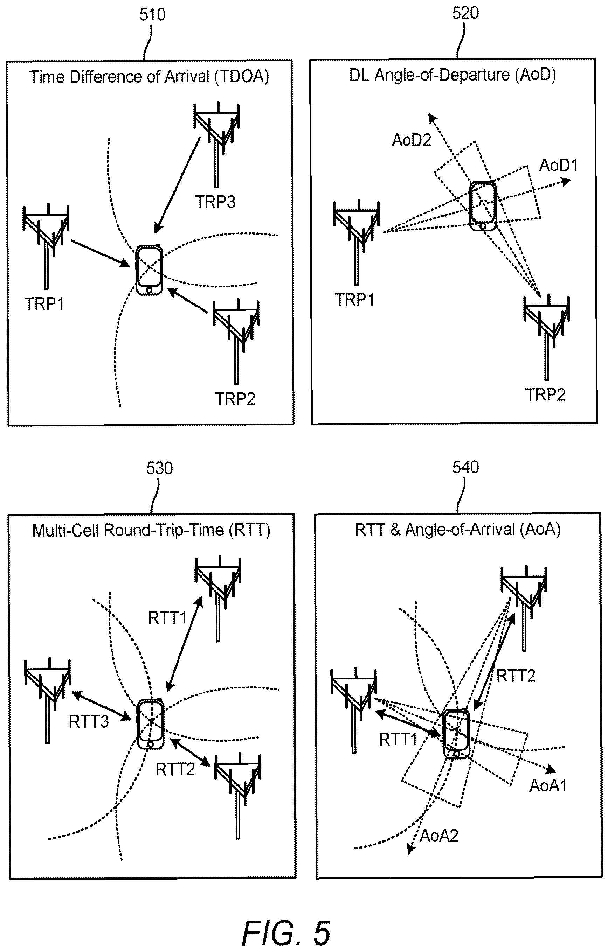

NR supports a number of cellular network-based positioning technologies, including downlink-based, uplink-based, and downlink-and-uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. FIG. 5 illustrates examples of various positioning methods, according to aspects of the disclosure. In an OTDOA or DL-TDOA positioning procedure, illustrated by scenario 510, a UE measures the differences between the times of arrival (ToAs) of reference signals (e.g., positioning reference signals (PRS)) received from pairs of base stations, referred to as reference signal time difference (RSTD) or time difference of arrival (TDOA) measurements, and reports them to a positioning entity. More specifically, the UE receives the identifiers (IDs) of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity (e.g., the UE for UE-based positioning or a location server for UE-assisted positioning) can estimate the UE's location.

For DL-AoD positioning, illustrated by scenario 520, the positioning entity uses a measurement report from the UE of received signal strength measurements of multiple downlink transmit beams to determine the angle(s) between the UE and the transmitting base station(s). The positioning entity can then estimate the location of the UE based on the determined angle(s) and the known location(s) of the transmitting base station(s).

Uplink-based positioning methods include uplink time difference of arrival (UL-TDOA) and uplink angle-of-arrival (UL-AoA). UL-TDOA is similar to DL-TDOA, but is based on uplink reference signals (e.g., sounding reference signals (SRS)) transmitted by the UE to multiple base stations. Specifically, a UE transmits one or more uplink reference signals that are measured by a reference base station and a plurality of non-reference base stations. Each base station then reports the reception time (referred to as the relative time of arrival (RTOA)) of the reference signal(s) to a positioning entity (e.g., a location server) that knows the locations and relative timing of the involved base stations. Based on the reception-to-reception (Rx-Rx) time difference between the reported RTOA of the reference base station and the reported RTOA of each non-reference base station, the known locations of the base stations, and their known timing offsets, the positioning entity can estimate the location of the UE using TDOA.

For UL-AoA positioning, one or more base stations measure the received signal strength of one or more uplink reference signals (e.g., SRS) received from a UE on one or more uplink receive beams. The positioning entity uses the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods include enhanced cell-ID (E-CID) positioning and multi-round-trip-time (RTT) positioning (also referred to as "multi-cell RTT" and "multi-RTT"). In an RTT procedure, a first entity (e.g., a base station or a UE) transmits a first RTT-related signal (e.g., a PRS or SRS) to a second entity (e.g., a UE or base station), which transmits a second RTT-related signal (e.g., an SRS or PRS) back to the first entity. Each entity measures the time difference between the time of arrival (ToA) of the received RTT-related signal and the transmission time of the transmitted RTT-related signal. This time difference is referred to as a reception-to-transmission (Rx-Tx) time difference. The Rx-Tx time difference measurement may be made, or may be adjusted, to include only a time difference between nearest slot boundaries for the received and transmitted signals. Both entities may then send their Rx-Tx time difference measurement to a location server (e.g., an LMF 270), which calculates the round trip propagation time (i.e., RTT) between the two entities from the two Rx-Tx time difference measurements (e.g., as the sum of the two Rx-Tx time difference measurements). Alternatively, one entity may send its Rx-Tx time difference measurement to the other entity, which then calculates the RTT. The distance between the two entities can be determined from the RTT and the known signal speed (e.g., the speed of light). For multi-RTT positioning, illustrated by scenario 530, a first entity (e.g., a UE or base station) performs an RTT positioning procedure with multiple second entities (e.g., multiple base stations or UEs) to enable the location of the first entity to be determined (e.g., using multilateration) based on distances to, and the known locations of, the second entities. RTT and multi-RTT methods can be combined with other positioning techniques, such as UL-AoA and DL-AoD, to improve location accuracy, as illustrated by scenario 540.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base station(s).

To assist positioning operations, a location server (e.g., location server 230, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive slots including PRS, periodicity of the consecutive slots including PRS, muting sequence, frequency hopping sequence, reference signal identifier, reference signal bandwidth, etc.), and/or other parameters applicable to the particular positioning method. Alternatively, the assistance data may originate directly from the base stations themselves (e.g., in periodically broadcasted overhead messages, etc.). In some cases, the UE may be able to detect neighbor network nodes itself without the use of assistance data.

In the case of an OTDOA or DL-TDOA positioning procedure, the assistance data may further include an expected RSTD value and an associated uncertainty, or search window, around the expected RSTD. In some cases, the value range of the expected RSTD may be +/- 500 microseconds (µs). In some cases, when any of the resources used for the positioning measurement are in FR1, the value range for the uncertainty of the expected RSTD may be +/- 32 µs. In other cases, when all of the resources used for the positioning measurement(s) are in FR2, the value range for the uncertainty of the expected RSTD may be +/- 8 µs.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

NR supports, or enables, various sidelink positioning techniques. FIG. 6A illustrates various scenarios of interest for sidelink-only or joint Uu and sidelink positioning, according to aspects of the disclosure. In scenario 610, at least one peer UE with a known location can improve the Uu-based positioning (e.g., multi-cell round-trip-time (RTT), downlink time difference of arrival (DL-TDOA), etc.) of a target UE by providing an additional anchor (e.g., using sidelink RTT (SL-RTT)). In scenario 620, a low-end (e.g., reduced capacity, or "RedCap") target UE may obtain the assistance of premium UEs to determine its location using, e.g., sidelink positioning and ranging procedures with the premium UEs. Compared to the low-end UE, the premium UEs may have more capabilities, such as more sensors, a faster processor, more memory, more antenna elements, higher transmit power capability, access to additional frequency bands, or any combination thereof. In scenario 630, a relay UE (e.g., with a known location) participates in the positioning estimation of a remote UE without performing uplink positioning reference signal (PRS) transmission over the Uu interface. Scenario 840 illustrates the joint positioning of multiple UEs. Specifically, in scenario 640, two UEs with unknown positions can be jointly located in non-line-of-sight (NLOS) conditions by utilizing constraints from nearby UEs.

FIG. 6B illustrates additional scenarios of interest for sidelink-only or joint Uu and sidelink positioning, according to aspects of the disclosure. In scenario 650, UEs used for public safety (e.g., by police, firefighters, and/or the like) may perform peer-to-peer (P2P) positioning and ranging for public safety and other uses. For example, in scenario 650, the public safety UEs may be out of coverage of a network and determine a location or a relative distance and a relative position among the public safety UEs using sidelink positioning techniques. Similarly, scenario 660 shows multiple UEs that are out of coverage and determine a location or a relative distance and a relative position using sidelink positioning techniques, such as SL-RTT.

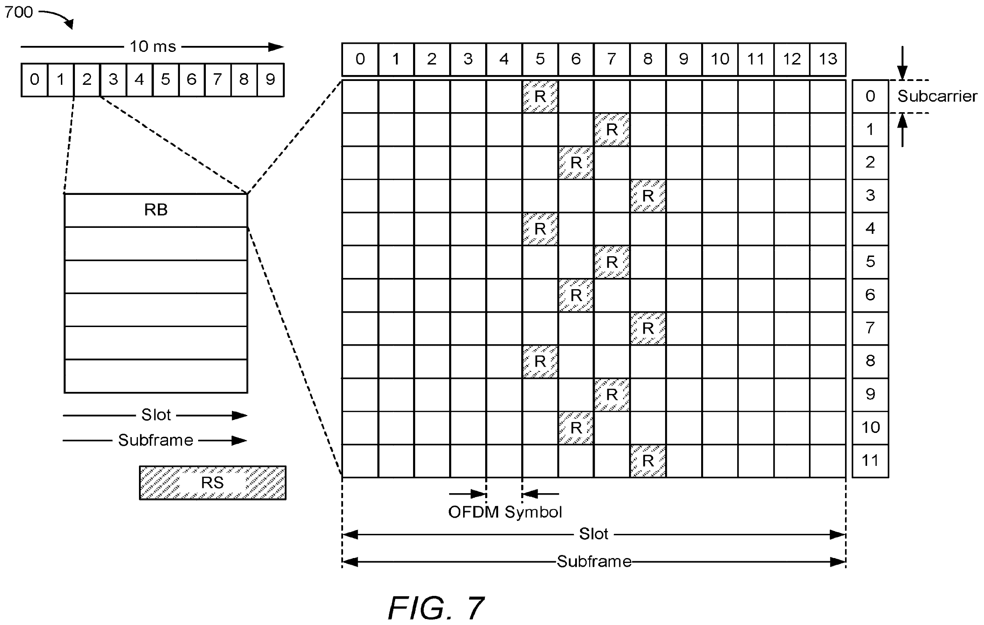

Various frame structures may be used to support downlink and uplink transmissions between network nodes (e.g., base stations and UEs). FIG. 7 is a diagram 700 illustrating an example frame structure, according to aspects of the disclosure. The frame structure may be a downlink or uplink frame structure. Other wireless communications technologies may have different frame structures and/or different channels.

LTE, and in some cases NR, utilizes orthogonal frequency-division multiplexing (OFDM) on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kilohertz (kHz) and the minimum resource allocation (resource block) may be 12 subcarriers (or 180 kHz). Consequently, the nominal fast Fourier transform (FFT) size may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing (SCS), symbol length, etc.). In contrast, NR may support multiple numerologies (µ), for example, subcarrier spacings of 15 kHz (µ=0), 30 kHz (µ=1), 60 kHz (µ=2), 120 kHz (µ=3), and 240 kHz (µ=4) or greater may be available. In each subcarrier spacing, there are 14 symbols per slot. For 15 kHz SCS (µ=0), there is one slot per subframe, 10 slots per frame, the slot duration is 1 millisecond (ms), the symbol duration is 66.7 microseconds (µs), and the maximum nominal system bandwidth (in MHz) with a 4K FFT size is 50. For 30 kHz SCS (µ=1), there are two slots per subframe, 20 slots per frame, the slot duration is 0.5 ms, the symbol duration is 33.3 µs, and the maximum nominal system bandwidth (in MHz) with a 4K FFT size is 100. For 60 kHz SCS (µ=2), there are four slots per subframe, 40 slots per frame, the slot duration is 0.25 ms, the symbol duration is 16.7 µs, and the maximum nominal system bandwidth (in MHz) with a 4K FFT size is 200. For 120 kHz SCS (µ=3), there are eight slots per subframe, 80 slots per frame, the slot duration is 0.125 ms, the symbol duration is 8.33 µs, and the maximum nominal system bandwidth (in MHz) with a 4K FFT size is 400. For 240 kHz SCS (µ=4), there are 16 slots per subframe, 160 slots per frame, the slot duration is 0.0625 ms, the symbol duration is 4.17 µs, and the maximum nominal system bandwidth (in MHz) with a 4K FFT size is 800.

In the example of FIG. 7, a numerology of 15 kHz is used. Thus, in the time domain, a 10 ms frame is divided into 10 equally sized subframes of 1 ms each, and each subframe includes one time slot. In FIG. 7, time is represented horizontally (on the X axis) with time increasing from left to right, while frequency is represented vertically (on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In the numerology of FIG. 7, for a normal cyclic prefix, an RB may contain 12 consecutive subcarriers in the frequency domain and seven consecutive symbols in the time domain, for a total of 84 REs. For an extended cyclic prefix, an RB may contain 12 consecutive subcarriers in the frequency domain and six consecutive symbols in the time domain, for a total of 72 REs. The number of bits carried by each RE depends on the modulation scheme.

Some of the REs may carry reference (pilot) signals (RS). The reference signals may include positioning reference signals (PRS), tracking reference signals (TRS), phase tracking reference signals (PTRS), cell-specific reference signals (CRS), channel state information reference signals (CSI-RS), demodulation reference signals (DMRS), primary synchronization signals (PSS), secondary synchronization signals (SSS), synchronization signal blocks (SSBs), sounding reference signals (SRS), etc., depending on whether the illustrated frame structure is used for uplink or downlink communication. FIG. 7 illustrates example locations of REs carrying a reference signal (labeled "R").

In addition to the downlink-based, uplink-based, and downlink-and-uplink-based positioning methods, NR supports various sidelink positioning techniques. For example, link-level ranging signals can be used to estimate the distance between pairs of V-UEs or between a V-UE and a roadside unit (RSU), similar to a round-trip-time (RTT) positioning procedure.

Sidelink communication takes place in transmission or reception resource pools. In the frequency domain, the minimum resource allocation unit is a sub-channel (e.g., a collection of consecutive PRBs in the frequency domain). In the time domain, resource allocation is in one slot intervals. However, some slots are not available for sidelink, and some slots contain feedback resources. In addition, sidelink resources can be (pre)configured to occupy fewer than the 14 symbols of a slot.

Sidelink resources are configured at the radio resource control (RRC) layer. The RRC configuration can be by pre-configuration (e.g., preloaded on the UE) or configuration (e.g., from a serving base station).

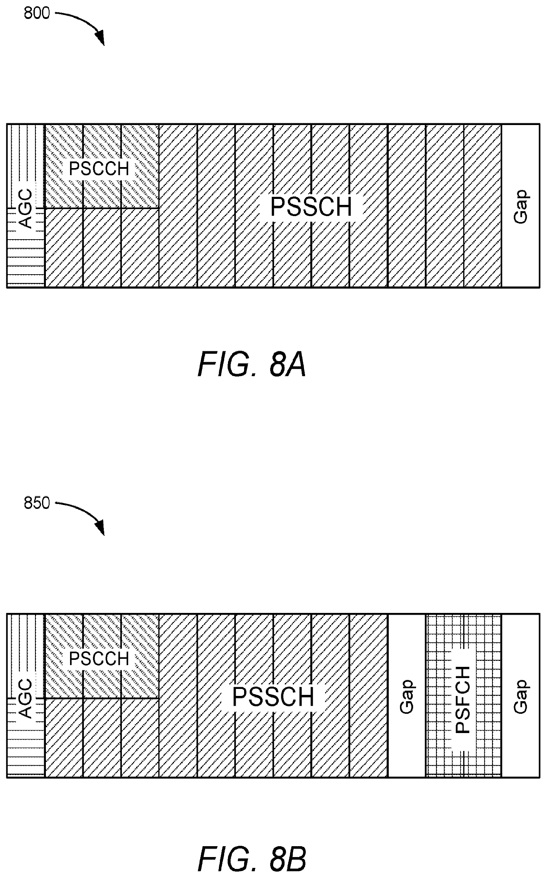

NR sidelinks support hybrid automatic repeat request (HARQ) retransmission. FIG. 8A is a diagram 900 of an example slot structure without feedback resources, according to aspects of the disclosure. In the example of FIG. 8A, time is represented horizontally and frequency is represented vertically. In the time domain, the length of each block is one orthogonal frequency division multiplexing (OFDM) symbol, and the 14 symbols make up a slot. In the frequency domain, the height of each block is one sub-channel. Currently, the (pre)configured sub-channel size can be selected from the set of {10, 15, 20, 25, 50, 75, 100} physical resource blocks (PRBs).

For a sidelink slot, the first symbol is a repetition of the preceding symbol and is used for automatic gain control (AGC) setting. This is illustrated in FIG. 8A by the vertical and horizontal hashing. As shown in FIG. 8A, for sidelink, the physical sidelink control channel (PSCCH) and the physical sidelink shared channel (PSSCH) are transmitted in the same slot. Similar to the physical downlink control channel (PDCCH), the PSCCH carries control information about sidelink resource allocation and descriptions about sidelink data transmitted to the UE. Likewise, similar to the physical downlink shared channel (PDSCH), the PSSCH carries user date for the UE. In the example of FIG. 8A, the PSCCH occupies half the bandwidth of the sub-channel and only three symbols. Finally, a gap symbol is present after the PSSCH.

FIG. 8B is a diagram 950 of an example slot structure with feedback resources, according to aspects of the disclosure. In the example of FIG. 8B, time is represented horizontally and frequency is represented vertically. In the time domain, the length of each block is one OFDM symbol, and the 14 symbols make up a slot. In the frequency domain, the height of each block is one sub-channel.

The slot structure illustrated in FIG. 8B is similar to the slot structure illustrated in FIG. 8A, except that the slot structure illustrated in FIG. 8B includes feedback resources. Specifically, two symbols at the end of the slot have been dedicated to the physical sidelink feedback channel (PSFCH). The first PSFCH symbol is a repetition of the second PSFCH symbol for AGC setting. In addition to the gap symbol after the PSSCH, there is a gap symbol after the two PSFCH symbols. Currently, resources for the PSFCH can be configured with a periodicity selected from the set of {0, 1, 2, 4} slots.

Another aspect of sidelink positioning is the configuration of sidelink resource pools for positioning (RP-Ps). The 12 symbols between the first symbol of a sidelink slot (for AGC) and the last symbol (the gap) in the time domain and the allocated subchannel(s) in the frequency domain form a resource pool for sidelink transmission and/or reception. An RP-P can be configured within a resource pool specifically for positioning purposes. Each RP-P includes an offset, periodicity, number of consecutive symbols within a slot (e.g., as few as one symbol), and/or the bandwidth within a component carrier (or the bandwidth across multiple component carriers). In addition, each RP-P can be associated with a zone or a distance from a reference location.

A base station (or a UE) can assign, to another UE, one or more resource configurations from the RP-Ps. Additionally or alternatively, a UE (e.g., a relay or a remote UE) can request one or more RP-P configurations, and it can include in the request one or more of the following: (1) its location information (or zone identifier), (2) periodicity, (3) bandwidth, (4) offset, (5) number of symbols, and (6) whether a configuration with "low interference" is needed (which can be determined through an assigned quality of service (QoS) or priority).

A base station or a UE can configure/assign rate matching resources or RP-P for rate matching and/or muting to a sidelink UE such that when a collision exists between the assigned resources and another resource pool that contains data (PSSCH) and/or control (PSCCH), the sidelink UE is expected to rate match, mute, and/or puncture the data, DMRS, and/or CSI-RS within the colliding resources. This would enable orthogonalization between positioning and data transmissions for increased coverage of PRS signals.

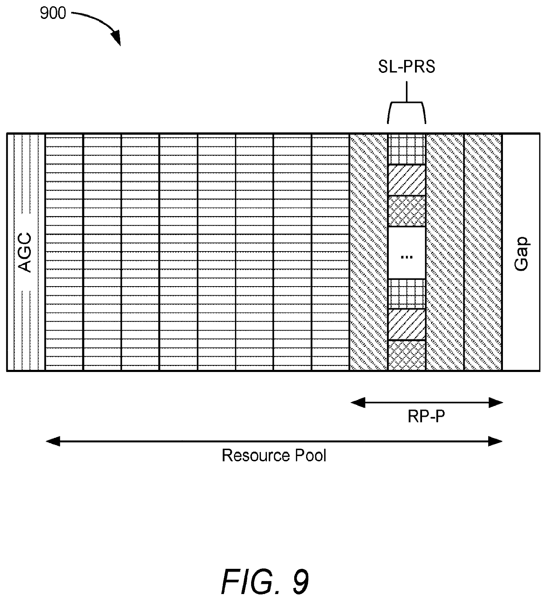

FIG. 9 is a diagram 900 illustrating an example of a resource pool for positioning within a sidelink resource pool, according to aspects of the disclosure. In the example of FIG. 9, time is represented horizontally and frequency is represented vertically. In the time domain, the length of each block is an orthogonal frequency division multiplexing (OFDM) symbol, and the 14 symbols make up a slot. In the frequency domain, the height of each block is a sub-channel.

In the example of FIG. 9, the entire slot (except for the first and last symbols) can be a resource pool for sidelink transmission and/or reception. That is, any of the symbols other than the first and last can be allocated for transmission and/or reception. However, an RP-P for sidelink transmission/reception is allocated in the last four pre-gap symbols of the slot. As such, non-sidelink positioning data, such as user data, CSI-RS, and control information, can only be transmitted in the first eight post-AGC symbols and not in the last four pre-gap symbols to prevent a collision with the configured RP-P. The non-sidelink positioning data that would otherwise be transmitted in the last four pre-gap symbols can be punctured or muted, or the non-sidelink data that would normally span more than the eight post-AGC symbols can be rate matched to fit into the eight post-AGC symbols.

Sidelink positioning reference signals (SL-PRS) have been defined to enable sidelink positioning procedures among UEs. Like a downlink PRS (DL-PRS), an SL-PRS resource is composed of one or more resource elements (i.e., one OFDM symbol in the time domain and one subcarrier in the frequency domain). SL-PRS resources have been designed with a comb-based pattern to enable fast Fourier transform (FFT)-based processing at the receiver. SL-PRS resources are composed of unstaggered, or only partially staggered, resource elements in the frequency domain to provide small time of arrival (TOA) uncertainty and reduced overhead of each SL-PRS resource. SL-PRS may also be associated with specific RP-Ps (e.g., certain SL-PRS may be allocated in certain RP-Ps). SL-PRS have also been defined with intra-slot repetition (not shown in FIG. 9) to allow for combining gains (if needed). There may also be inter-UE coordination of RP-Ps to provide for dynamic SL-PRS and data multiplexing while minimizing SL-PRS collisions.

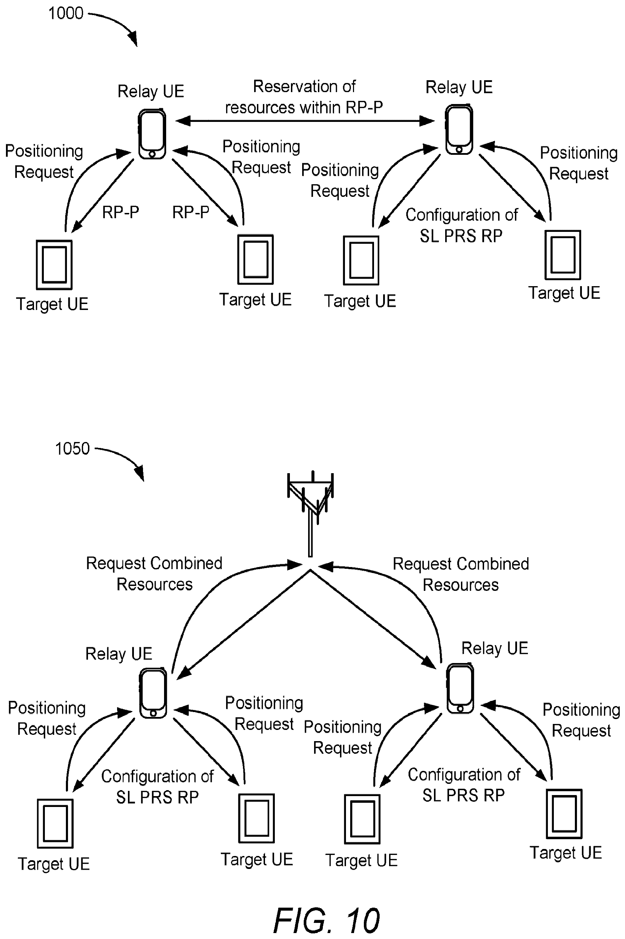

FIG. 10 illustrates different resource pool for positioning (RP-P) assignment procedures, according to aspects of the disclosure. Specifically, diagram 1000 illustrates a reservation-based approach between two relay UEs to minimize the overhead/collisions caused by their associated target UEs using the same RP-P. Diagram 1050 illustrates a two-step assignment procedure with a serving base station. In a first stage, the base station can assign orthogonal RP-Ps. In a second stage, each relay UE decides on what resources within the assigned RP-P should be assigned to the target UEs.

There are two types of resource allocation for sidelink communication, referred to as "Mode 1" and "Mode 2." For Mode 1 resource allocation, the base station allocates resources for sidelink communication between UEs. For Mode 2 resource allocation, the involved UEs autonomously select sidelink resources. A congestion control mechanism is applied in NR-V2X for Mode 2 resource allocation and is similar to the mechanism in LTE-V2X. A UE may use two types of measurements to detect and mitigate the effect of congestion when Mode 2 resource allocation is applied: channel busy ratio (CBR) and channel occupancy ratio (CR). The CBR is calculated in each subframe as the portion of busy resources in a resource pool in the last 100 milliseconds (ms). A resource (e.g., a set of resource elements, one or more symbols, one or more slots, etc.) is considered as busy if the received energy level in the resource is higher than a given threshold. CBR measurement results reflect the congestion on the medium. The CR reflects the occupancy of resources by a UE. The CR is the number of sub-channels that a UE occupies and will occupy in a time window of 1000 ms.

With further reference to congestion control, the priority of a packet is defined by higher layers and passed to the physical layer that is indicated in SCI-1. The CR and transmission parameters are adapted based on the relative priority of the UE's traffic and the CBR. To react to the fast variations in the congestion of resources, NR-V2X defines shorter intervals for the calculation of the CBR and CR. Currently, the intervals are 1 or 2 ms in NR-V2X compared to 4 ms in LTE-V2X.

NR sidelink supports CBR as a metric for congestion control. A sidelink received signal strength indication (RSSI) measurement is used for the CBR estimation. Alternatively, an RSRP measurement may be used. Congestion control can restrict the following transmission parameters: (1) modulation and coding scheme (MCS) indices and MCS tables, (2) the number of sub-channels per transmission, (3) the number of retransmissions, and (4) the transmission power. For example, the more congestion on the medium, the lower the MCS, resulting in lower data rates. Similarly, the more congestion, the lower the transmit power to decrease interference. The absolute UE speed can also restrict transmission parameters.

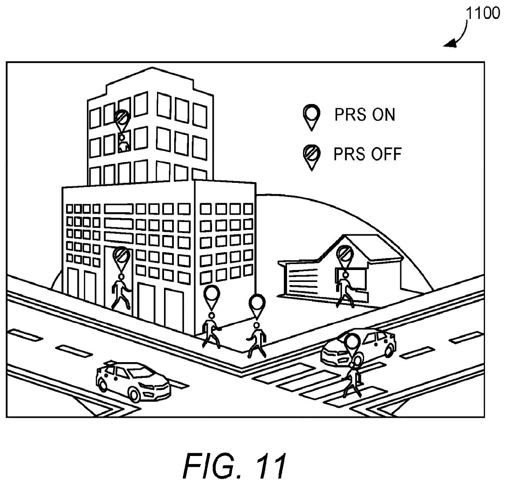

FIG. 11 is a diagram 1100 illustrating an urban setting in which various UEs may be ON, or actively transmitting sidelink SL-PRS, and various other UEs may be OFF, or not actively transmitting SL-PRS. For example, in a power saving mode or other setting, certain UEs may not be transmitting SL-PRS despite being configured for sidelink communication. As illustrated, pedestrian UEs (e.g., vulnerable road users (VRUs)) may be ON and actively transmitting SL-PRS so that nearby UEs can measure the pedestrian UE's SL-PRS. The various UE devices that are OFF and not actively transmitting SL-PRS signals may be configured for sidelink communication and may be receiving signals from nearby UEs that are ON and actively transmitting SL-PRS. Thus, a UE may be powered on and not have certain sidelink communications active (e.g., SL-PRS receive and/or transmit disabled) based on the UE's settings.

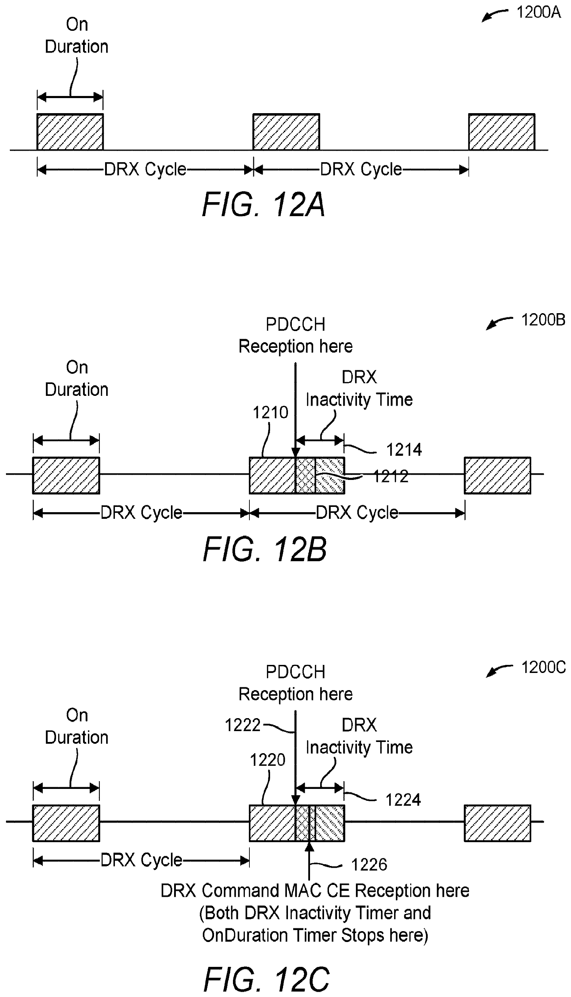

As noted, a vulnerable road user (VRU) may be an NR UE for vehicle to VRU communication or VRU to vehicle communication. For example, a hearing-impaired person may receive vibrations from a wearable (the VRU) when a vehicle is approaching based on signals from the vehicle. Likewise, the wearable may transmit its location to the vehicle and such location may be used by its driving assistance functionality. In some situations, a UE may be configured to turn OFF, disable, or disconnect the transmit and/or receive functions for sidelink communications. For example, the determination to wake up or "sleep" may be based on the UE's discontinuous reception (DRX) cycle. These DRX cycles are described in more detail with respect to FIGS. 12A-12C below.

A UE may have settings for sleep, wake up, activation, deactivation, or discontinuous operation of the transmission (Tx) or reception (Rx) of sidelink position reference signals (SL-PRS). Aspects of this disclosure contemplate localized activation of these modes or settings based on location data, priority status of the network, demands from other UEs, and a priority of the UE. Since these and other features may degrade the reliability of the UE for provision of SL-PRS and may waste sidelink resources within a resource pool, various processes are disclosed below that enable the reduced reliability or puncturability of SL-PRS for a UE to be more predictable. That is, based on information shared between devices, assistance data, and the prior history of transmission, a UE may predict when, where, and if another UE will deactivate one or more SL-PRS functions. For example, various settings or configurations of the UE and, specifically, the Tx/Rx capabilities, may provide for override of at least a portion of the DRX mode of the UE. In short, a balance between power saving, via DRX mode, and location monitoring/transmission, via SL-PRS, may be achieved.

Even when there is no traffic being transmitted from the network to a UE, the UE is expected to monitor every downlink subframe on the physical downlink control channel (PDCCH). This means that the UE has to be "on," or active, all the time, even when there is no traffic, since the UE does not know exactly when the network will transmit data for it. However, being active all the time is a significant power drain for a UE.

To address this issue, a UE may implement discontinuous reception (DRX) and/or connected-mode discontinuous reception (CDRX) techniques. DRX and CDRX are mechanisms in which a UE goes into a "sleep" mode for a scheduled periods of time and "wakes up" for other periods of time. During the wake, or active, periods, the UE checks to see if there is any data coming from the network, and if there is not, goes back into sleep mode.

To implement DRX and CDRX, the UE and the network need to be synchronized. In a worst-case scenario, the network may attempt to send some data to the UE while the UE is in sleep mode, and the UE may wake up when there is no data to be received. To prevent such scenarios, the UE and the network should have a well-defined agreement about when the UE can be in sleep mode and when the UE should be awake/active. This agreement has been standardized in various technical specifications. Note that DRX includes CDRX, and thus, references to DRX refer to both DRX and CDRX, unless otherwise indicated.

The network (e.g., serving cell) can configure the UE with the DRX/CDRX timing using an RRC Connection Reconfiguration message (for CDRX) or an RRC Connection Setup message (for DRX). The network can signal the following DRX configuration parameters to the UE. (1) DRX Cycle: The duration of one 'ON time' plus one 'OFF time.' This value is not explicitly specified in RRC messages; rather, it is calculated by the subframe/slot time and "long DRX cycle start offset." (2) ON Duration Timer: The duration of 'ON time' within one DRX cycle. (3) DRX Inactivity Timer: How long a UE should remain 'ON' after the reception of a PDCCH (e.g., number of expected transmission instances). When this timer is on, the UE remains in the 'ON state,' which may extend the ON period into the period that would be the 'OFF' period otherwise. (4) DRX Retransmission Timer: The maximum number of consecutive PDCCH subframes/slots a UE should remain active to wait for an incoming retransmission after the first available retransmission time. (5) Short DRX Cycle: A DRX cycle that can be implemented within the 'OFF' period of a long DRX cycle. (6) DRX Short Cycle Timer: The consecutive number of subframes/slots that should follow the short DRX cycle after the DRX inactivity timer has expired.

FIGS. 12A to 12C illustrate example DRX configurations, according to aspects of the disclosure. FIG. 12A illustrates an example DRX configuration 1200A in which a long DRX cycle (the time from the start of one ON duration to the start of the next ON duration) is configured and no PDCCH is received during the cycle. FIG. 12B illustrates an example DRX configuration 1200B in which a long DRX cycle is configured and a PDCCH is received during an ON duration 1210 of the second DRX cycle illustrated. Note that the ON duration 1210 ends at time 1212. However, the time that the UE is awake/active (the "active time") is extended to time 1214 based on the length of the DRX inactivity timer and the time at which the PDCCH is received. Specifically, when the PDCCH is received, the UE starts the DRX inactivity timer and stays in the active state until the expiration of that timer (which is reset each time a PDCCH is received during the active time).

FIG. 12C illustrates an example DRX configuration 1200C in which a long DRX cycle is configured and a PDCCH and a DRX command MAC control element (MAC-CE) are received during an ON duration 1220 of the second DRX cycle illustrated. Note that the active time beginning during ON duration 1220 would normally end at time 1224 due to the reception of the PDCCH at time 1222 and the subsequent expiration of the DRX inactivity timer at time 1224, as discussed above with reference to FIG. 12B. However, in the example of FIG. 12C, the active time is shortened to time 1226 based on the time at which the DRX command MAC-CE, which instructs the UE to terminate the DRX inactivity timer and the ON duration timer, is received.

In greater detail, the active time of a DRX cycle is the time during which the UE is considered to be monitoring the PDCCH. The active time may include the time during which the ON duration timer is running, the DRX inactivity timer is running, the DRX retransmission timer is running, the MAC contention resolution timer is running, a scheduling request has been sent on the PUCCH and is pending, an uplink grant for a pending HARQ retransmission can occur and there is data in the corresponding HARQ buffer, or a PDCCH indicating a new transmission addressed to the cell radio network temporary identifier (C-RNTI) of the UE has not been received after successful reception of a random access response (RAR) for the preamble not selected by the UE. And, in non-contention-based random access, after receiving the RAR, the UE should be in an active state until the PDCCH indicating new transmission addressed to the C-RNTI of the UE is received.

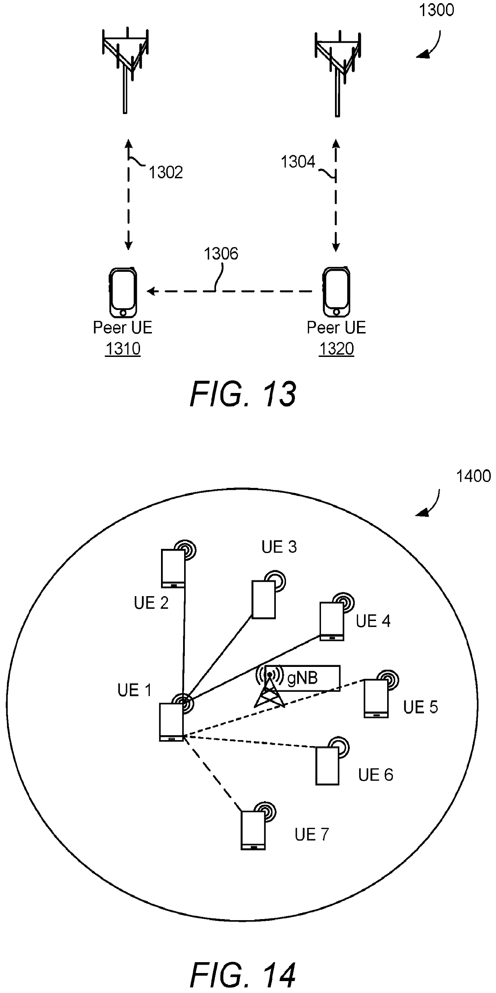

According to an aspect of the disclosure, the DRX cycle may be configured based on other aspects of the environment of the UE. That is, the duration of the active time, the period of inactivity required for sleep mode or an OFF state, and the transition from a long DRX cycle to a short DRX cycle may be configured to depend on environmental variables and measured variables. For example, the UE may have a location-based power saving feature (e.g., DRX mode or state). Defined configurations for DRX active time enable the behavior of the UE to be more predictable to its peers as illustrated in FIG. 13.

The configurations or settings for determining when SL-PRS signals of a UE may be ON or OFF may be based on the location of the device (e.g., indoors), activity of the device (e.g., in motion, charging, etc.), remaining power available (e.g., power saving mode), distance from other UEs, the operating mode (e.g., Mode 1 or Mode 2), or other settings. For example, public safety UEs may be active only when at emergency locations or outside of a station perimeter. As illustrated in FIG. 11, UEs that are not associated with vulnerable situations (e.g., not roadside pedestrians) have turned OFF their SL-PRS signaling. One or more regions or locations may be pre-configured into a UE or auto-configured such that the UE's SL-PRS transmission is switched to an OFF mode in that location or region. Despite the SL-PRS communication of the UE being OFF (e.g., Tx and Rx), the UE itself may be ON and may communicate over access links to radio units (RUs).

In order to save power or reduce interference, a UE may switch ON/OFF the transmission and reception over a radio link with a radio unit. That is, the transmit (Tx) channel and the reception (Rx) channel may be separately switchable ON/OFF so that the transmit channel to the radio unit is controlled independently from the reception channel. The DRX cycle or DRX mode may control the reception of the downlink control channel (e.g., PDCCH) from the radio unit. Likewise, a UE may switch ON/OFF the transmission and reception of sidelink signals, and, in particular, positioning reference signals (PRS). The DRX cycle or DRX mode noted previously may be adapted to control the reception (Rx) of sidelink signals. This capability or extension of the DRX mode may be referred to as SL-DRX. With SL-DRX functions, a UE may apply one or more of the DRX functions noted above with respect to FIG. 12A-12C to the physical sidelink control channel (PSCCH) or to the sidelink position reference signals (SL-PRS).

For example, in an active time or state for SL-DRX, a UE may power an antenna or receiver to receive (listen for) PSCCH and SL-PRS signals. In an inactive time or state for SL-DRX, a UE may power down or switch OFF an antenna or receiver such that it is unable to receive PSCCH or SL-PRS. When a UE does have its sidelink receiver switched OFF, the UE may be excluded from a resource pool or may be removed from assistance data (AD) supporting the management of sidelink. Likewise, if the SL-DRX function is in a connected mode, various sidelink functionality may remain, whereas if the SL-DRX function is in an idle mode, less or no sidelink functionality may remain. Accordingly, when a UE has SL-DRX capability, the network may not consider that UE to be an always-ON resource or a reliable resource.

In an OFF state for DL-DRX, a UE may receive positioning reference signals (PRS) from nearby UEs despite not monitoring for the PDCCH or other control channels. Based on the received PRS, the UE may retain or maintain a list of nearby UEs. Upon turning ON or re-activating a UE's downlink, the UE may have accurate location information (e.g., from RTT) and may be aware of surrounding UEs for coordination of a resource pool. Likewise, in an OFF state for SL-DRX, an active UE (i.e., DL ON) may be aware of nearby UEs and may receive or calculate position information based on RTT. This information on nearby UEs may be based on non-sidelink signals or network information from the RU. The PRS-active UE may retain a list of nearby UEs and may record their PRS status (ON/OFF) as well. That is, DL-DRX and SL-DRX may have different DRX cycles and may be separately activated/deactivated. This stored information relating to nearby UEs, which may be received from the radio unit as assistance data or from inter-UE coordination, may enable the UE to more rapidly coordinate access to a resource pool upon wake up. In Mode 1 or Mode 2, the UE may retain or maintain these lists of local UEs and may store additional information such as configuration information to aid in sidelink coordination.

FIG. 13 illustrates two peer UEs 1310 and 1320 with active access links 1302 and 1304, respectively. The UE 1310 may be OFF and may not be transmitting PRS signals to peer UE 1320. The UE 1320 may transmit SL-PRS 1306 to the UE 1310 despite no signals having been received from UE 1310 in a defined period. Another sidelink enhancement is the support of inter-UE coordination. With inter-UE coordination, the UE 1320 may assist UE 1310 with its resource selection. There are two types of inter-UE coordination, Type A and Type B. Regardless of whether the SL-PRS of the UE 1310 is ON or OFF, the UE 1320 may directly restrict the use of certain resources by the assisted UE 1310 (Type A). The UE 1320 may instruct the UE 1310 to restrict the use of certain resources or recommend which resources should be used (Type B). After receipt in Type B, the UE 1310 may decide whether to use or follow the recommendations, restrictions, or set of X resources sent by UE 1320. UE 1320 may also unilaterally restrict the use of its resources for one or more UEs including UE 1310 and inform the UEs of such restrictions. The sidelink resource information including DRX configuration information for the UEs may be received from access links 1302 and 1304 and from peer UEs (e.g., 1310 and 1320).

FIG 14 illustrates various sidelink connections between a first UE (labeled "UE 1") and several other UEs (labeled "UEs 2-7") utilizing Mode 1 resource allocation, according to aspects of the disclosure. The connections may be allocated in a sidelink resource pool (RP) provided by a gNB or base station. In the arrangement 1400 as illustrated, UE 1 may be engaged in a positioning session to determine an estimate of its location and UE 2, UE 3, UE 4, UE 5, UE 6, and UE 7 may be available or in range to assist UE 1. The gNB or other network entity may provide assistance data (AD) to the UE 1 indicating the SL-PRS configuration of the UEs 2-7 in the arrangement 1400. The AD configuration may include a SL-DRX configuration for each of the UEs 1-7. There will be some UEs that have the location-based power saving feature enabled. For example, UE 3 and UE 6 may be configured to be in a power-saving mode for SL-PRS transmission (e.g., in a DRX OFF state), and therefore, cannot be utilized for positioning. The UEs in power-saving mode for sidelink (UE 3 and UE 6) may remain connected to the gNB such that power-saving or SL-DRX is applied to sidelink Rx and not radio unit (DL) signals.

The location server (e.g., LMF 270) for the gNB of FIG. 14 may not be aware of the SL transmission statuses for each UE or the power optimization each UE is employing when providing assistance data for the positioning session. As such, to determine which UEs are transmitting SL-PRS, UE 1 may attempt to measure SL-PRS from each of the other UEs 2 to 7. This may be inefficient, however, and waste resources of UE 1, as not all of UEs 2 to UE 7 may be transmitting SL-PRS.

Accordingly, the present disclosure provides power saving techniques for sidelink operation. The power saving at a UE may be enabled by determining and reporting SL-PRS status using inter-UE positioning coordination signaling. In an implementation, the LMF may provide assistance data that includes a list of the UEs that may be available for positioning. The LMF may maintain and provide configuration information for the UEs along with the assistance data. At any given time, some of the UE's might not be transmitting because of their power saving functionality. Thus, the LMF's list of UEs ready to assist may not be up to date at any given time. The LMF's list may only indicate that the UE is configured to provide SL-PRS and not that such UE is actively doing so or currently capable to do so (enabled).

In an implementation, a UE (e.g., UE 1) in Mode 1 resource allocation may maintain a transmission/detection status report for sidelink PRS from nearby UEs. Each of the UEs 1-7 (e.g., UE 1 of FIG. 14) may have a process to periodically check whether a configured SL-PRS/RP-P is detectable. A positioning-session configuration received at UE 1 may assist UE 1 in determining the parameters and process for periodically checking the nearby UEs. The LMF may assist UE 1 in determining the parameters and process for periodically checking the nearby UEs (e.g., those UEs on the LMF's list as being SL-PRS configured). For example, the LMF may provide a positioning-session configuration for the UE that defines one or more conditions for a UE' s measurements of SL-PRS to satisfy in order to confirm that the SL-PRS of another UE is OFF or inactive. An applicable wireless standard may define one or more conditions for a UE's measurements of SL-PRS to satisfy in order to confirm that the SL-PRS of another UE is OFF or inactive. That is, the UE may have (or may be provided with via AD) one or more conditions for determining whether a nearby UE's SL-PRS is OFF (e.g., SL-DRX mode in an inactive state) despite being configured for SL-PRS or listed in the AD of the location server. In this way, UE 1 may determine that UE 3 and UE 6 are not available for SL-PRS assistance despite being configured for SL-PRS or listed as such. A detecting UE may record a list of UEs that are inactive or undetectable and share that list with other UEs.

The conditions for determining that a SL-PRS resource is inactive may correspond to a number of measurements, including a reference signal received power (RSRP) (power level), a signal to interference and noise ratio (SINR) (interference level), and/or a signal to noise ratio (SNR) (noise level). The determination of ON/OFF or active/inactive may be determined by one or more thresholds corresponding to these or other measurements and may be averaged over a time period. The AD may include pre-specified conditions that the measurements should satisfy in order to determine or record that a SL-PRS is OFF or inactive. This determination may be stored on the measuring UE to improve efficiency of that UE. For example, UE 1 may cease attempting to measure SL-PRS from UE 3 after determining via one or more of the above conditions that UE 3 is OFF. The detecting UE may transmit these conditions for the determination with the list of inactive UEs.

With reference still to FIG. 14, the UE 1 requiring position assistance may determine that UE 3 and UE 6 are inactive after certain conditions are satisfied as noted above. These conditions may be specified by the UE itself or the LMF or the gNB. In an implementation, the UE 1 may inform the LMF of which UEs in the AD have been measured and determined to be OFF. In addition, the UE 3 or UE 6, for example, may inform the LMF and/or peer UEs (e.g., UE 1, UE 7) that their device type or configuration may disable SL-PRS without warning. That is, UEs that cannot reliably transmit SL-PRS (e.g., due to SL-DRX) or low-end UEs may inform the LMF and/or their peers that they may deactivate SL-PRS at any time (e.g., puncturable/discontinuous). This puncturability, reliability, and availability information may be determined by the LMF based on configuration information from the UE including DRX capabilities, location-based power saving modes, and priority status. Accordingly, the LMF may store two AD lists, a first list (set) of reliable UEs (and non-puncturable) that can be assumed to be ON if they are configured for SL-PRS, and a second list (set) of unreliable UEs (puncturable/discontinuous) that may or may not be ON (e.g., conditionally ON). The UEs receiving these AD lists may decide for themselves which UEs to contact for positioning assistance or may be instructed to use only the first list (non-puncturable or available UEs).

The UE 1 or LMF may employ an implicit rule (condition) for determining which SL-PRS/RP-P may be assumed to be ON and/or which SL-PRS/RP-P can be potentially OFF / potentially puncturable. A relevant wireless standard may define rules or conditions for determining which SL-PRS/RP-P may be assumed to be ON and/or which SL-PRS/RP-P can be potentially OFF / potentially puncturable. For example, a low-priority SL-PRS may be assumed as being potentially inactive. The UEs and LMF may determine UE position assistance reliability by inference from UE configuration data (e.g., presence of a DRX configuration), by explicit information from the UE, or by determined status as recorded by the UE desiring assistance or other UEs on the network, or a combination thereof. The assistance data (AD) from the LMF may include transmission certainty data or reliability for each SL-PRS (puncturability/discontinuity). This certainty data may be used by a UE requiring assistance to set signal gain and determine whether to allocate resources to detecting a SL-PRS. This certainty data may assist the UE in differentiating between a low signal from a UE and an inactive UE (e.g., with SL-DRX in inactive state) and reduce the power consumed searching for inactive devices.

Inter-UE coordination for positioning may include determining that one or more SL-PRS provided by the AD information are indeed OFF. If a UE (e.g., UE 7) receives information that some SL-PRS/RP-P may potentially be OFF/punctured/inactive, a positioning UE may apply this additional information along with the AD configuration for any measurements. If the UE determines by measurement that one or more conditions of the AD configuration are satisfied, then a UE may stop measuring the SL-PRS, which has been determined as not being transmitted, for some period time. A UE may inform the LMF whether the SL-PRS resources as measured are ON or can potentially be OFF in the future. A UE may inform nearby UEs (e.g., within the RP) that it determined that these SL-PRS resources are considered to be OFF, together with the thresholds for the determination, associated measurements, specifications, or other determining factors. That is, different UEs may have different conditions for determining that a SL-PRS/RP-P is OFF based on their respective hardware capabilities, for example.

With continued reference to FIG. 14, in Mode 2 resource allocation, inter-UE coordination for positioning may be used for determining that one or more SL-PRS are OFF or inactive. At any given time, some of the UEs (e.g., UE 3) might not be transmitting SL-PRS (e.g., because of the power saving functionality or DRX cycle). One UE (a primary UE) may maintain a record of the active/inactive status of SL-PRS transmissions by nearby UEs through signal measurement or inter-UE coordination signaling. This UE in Mode 2 may report to nearby UEs the measured SL-PRS status of other UEs together with a timestamp, a series of timestamps, measurement conditions, and/or other information forming the determination of status. The UEs may each have thresholds for determining the status of other UEs. For example, if the SL-PRS/RP-P resource has been determined to be OFF for more than X msec or for at least Y instances (where X and Y may be integers), then the UE is not expected to include that SL-PRS resource in the inter-UE coordination signaling. In other words, a UE may have a confidence metric that should be satisfied to determine that a specific SL-PRS/RP-P resource has been turned OFF.

A UE may request the SL-PRS transmission status of nearby UEs via inter-UE coordination signaling. Likewise, broadcast, groupcast, or unicast signaling may be used to inform nearby UEs on the status of the SL-PRS. An anchor UE managing the resource pool may perform the positioning resource reallocation procedure after getting the transmitting status for SL UEs in the area (i.e., within the RP-P or on the AD list). The anchor UE may perform the detecting and determining of transmission/activity status (e.g., ON/OFF) itself prior to a positioning resource reallocation procedure. The anchor UE may perform any of the informing features performed by the LMF described previously (e.g., AD broadcast).

A UE (e.g., UE 3) may be configured to enable or activate SL PRS resource transmission based on location. That is, the DRX mode may be a location-based DRX such as that illustrated in FIG. 12 where some UEs are in a DRX inactive state based on their location (e.g., inside building). Likewise, the DRX mode may be a motion-based or motion-activated power-saving function (e.g., wearable that sleeps in DRX inactive until moved). The location may be associated with proximity to other UEs (e.g., in a workplace). Even though a UE is configured for DRX, the transmission conditions of the UE may be predictable by the LMF, for example. That is, a LMF may be adapted to predict when a UE will enter a DRX OFF state based on location criteria and may include the UE in its AD list so long as that location criteria is not being met. If the UE is in a specific zone or has not moved from the initial zone where it provided SL-PRS, then independent of a SL-DRX configuration, the UE is expected to transmit the SL-PRS. If the LMF or an anchor UE detects that the SL-DRX configured device is moving towards a deactivation zone (where DRX will be in an inactive state) then LMF may remove the UE from the AD list.

A UE may be allowed (or decide) to transmit SL-PRS inside the DRX OFF state based on the determination of that UE. For example, if the SL-PRS resource is associated with a high-priority status, then this status may override the DRX OFF state, and the SL-PRS is transmitted despite the UE being in a DRX OFF state. The UE may report that even if it is configured for DRX, if the UE has a high-priority status or is in a high-priority RP, then the UE can advise other UEs or the LMF that its DRX cycle will be overridden. The SL-PRS for the UE, when high-priority, may be transmitted even during a DRX OFF period. The UE may include an override configuration that allows positioning resource transmission during a location-based DRX OFF period. As a result, the UE may be used as positioning reference during the DRX period.

A UE may request, in Mode 1 or Mode 2, on-demand SL-PRS resources or high-priority status based on its configuration so that the requesting UE is only supplied with SL-PRS resources expected to be ON / not puncturable. That is, the UE may request that the AD list includes only reliable UEs for position assistance. A base station / radio unit (in Mode 1) or an anchor UE (in Mode 2) may interpret a request for high-priority positioning as a request for on-demand SL-PRS resources that are not puncturable or intermittently OFF. The request may include a minimum period of time or time window information during which the SL-PRS resources are expected to be ON. The request is received by the LMF and/or other SL UEs. One or more of the UEs receiving the request may switch to a transmit only mode to provide the requesting UE with on-demand SL-PRS resources.

The UE that is designated to transmit such a SL-PRS to the requesting peer UE is expected to drop other colliding Tx channels and other colliding Rx channels. For example, the SL UE may not switch to Rx mode as it normally would and instead remain a dedicated or on-demand SL-PRS transmission resource for a defined period. The override of the Rx mode of the SL transceiver ensures that the on-demand UE transmits the SL-PRS and that the SL-PRS is not queued or delayed by other transmissions. For longer periods of requested on-demand SL-PRS resources, the LMF or anchor UE may rotate or periodically transfer the on-demand duty. For example, emergency responder UEs may demand high-priority or on-demand resources for as long as they are on site or responding.

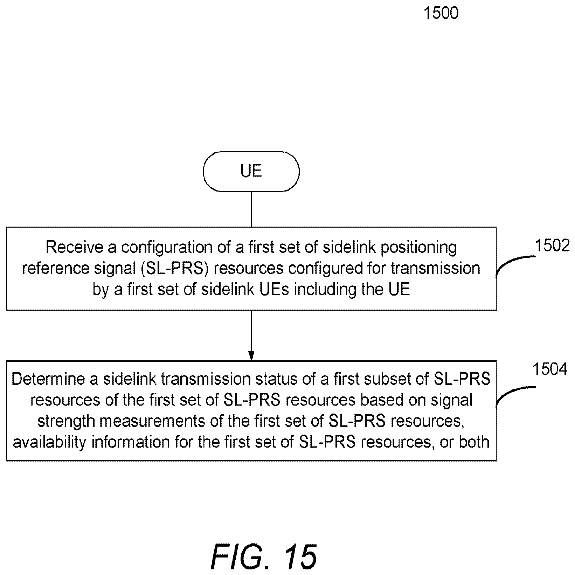

FIG. 15 illustrates an example method 1500 of wireless communication, according to aspects of the disclosure. In an aspect, method 1500 may be performed by a UE (e.g., any of the UEs described herein). At 1502, the UE may receive a configuration of a first set of sidelink positioning reference signal (SL-PRS) resources configured for transmission by a first set of sidelink UEs including the UE. In an aspect, operation 1502 may be performed by the one or more transceivers 310-320, the one or more processors 332, memory 340, and/or positioning component 342, any or all of which may be considered means for performing this operation.

At 1504, the UE may determine a sidelink transmission status of a first subset of SL-PRS resources of the first set of SL-PRS resources based on signal strength measurements of the first set of SL-PRS resources, availability information for the first set of SL-PRS resources, or both. In an aspect, operation 1504 may be performed by the one or more transceivers 310-320, the one or more processors 332, memory 340, and/or positioning component 342, any or all of which may be considered means for performing this operation.

As will be appreciated, a technical advantage of the method 1500 is power saving.

The determining of method 1500 may include determining that the sidelink transmission status of the first subset of SL-PRS resources is inactive based on the signal strength measurements for the first subset of SL-PRS resources being below a threshold, determining that a sidelink transmission status of a second subset of SL-PRS resources is active based on the signal strength measurements for the second subset being above the threshold. The signal strength measurements may include a power level, a noise level, or an interference level, or any combination thereof. The threshold may be received from a location server or a base station. The method 1500 may report the sidelink transmission status of the first subset of SL-PRS resources to at least one additional UE sharing the first set of SL-PRS resources. The availability information for the first set of SL-PRS resources indicates available SL-PRS resources and conditionally available SL-PRS resources. The available SL-PRS resources are configured to be transmitted, and the conditionally available SL-PRS resources are discontinuous, puncturable, or conditionally active.

At least a portion of the availability information for the first set of SL-PRS resources may be received in the configuration. Some availability information is high-level (e.g., device has DRX mode capability) and may be included in AD or the configuration from the network node. Other availability information may be sourced from other UEs, such as "is the DRX mode enabled" or "what location trigger switches the device to DRX off mode". The availability information for the first set of SL-PRS resources may be received from a first UE of the first set of sidelink UEs or a network node. The availability information for the first set of SL-PRS resources indicates a discontinuous reception (DRX) mode or a power-saving mode of a second UE of the first set of sidelink UEs. The availability information for the first set of SL-PRS resources may include configuration information related to a location-based trigger for the DRX mode or the power-saving mode. The availability information for the first set of SL-PRS resources may be received from a location server or a network node and may comprise criteria for determining time periods during which SL-PRS are configured to be transmitted by at least one other UE of the first set of sidelink UEs, the criteria including a DRX mode configuration of the at least one other UE.

The determining of method 1500 may include determining the sidelink transmission status of the first subset of SL-PRS resources as active or inactive after a defined period of time based on the signal strength measurements detected at the UE. The sidelink transmission status of the first subset of SL-PRS resources is recorded together with a time stamp. The determining of method 1500 may include determining the sidelink transmission status of the first subset of SL-PRS resources based on presence or absence of an associated SL-PRS within a defined time period or for a given number of expected transmission instances. The method 1500 may include transmitting, to the first set of sidelink UEs, a first sidelink transmission status of the UE as active or inactive via inter-UE coordination. The method 1500 may include allocating, by the UE, a resource pool of the first set of SL-PRS resources based on the sidelink transmission status of the first subset of SL-PRS resources. The method 1500 may include receiving, at the UE, configuration information associated with a further UE within the first set of sidelink UEs, predicting, at the UE, an SL-PRS availability of the further UE based on the configuration information, and transmitting assistance data (AD), the AD being based on the predicted SL-PRS availability. The predicting of the SL-PRS availability of the further UE may be based on the configuration information and a location of the further UE.

The further UE of the first set of sidelink UEs may be configured with a discontinuous reception (DRX) mode and the UE predicts that the DRX mode is disabled for the further UE at a location based on prior SL-PRS transmissions from the further UE at the location. Receiving configuration information may be associated with a further UE of the first set of sidelink UEs and reserving SL-PRS resources of a resource pool for the further UE may be based on configuration information and a priority status of the further UE. The further UE may be in an inactive time of a DRX mode.

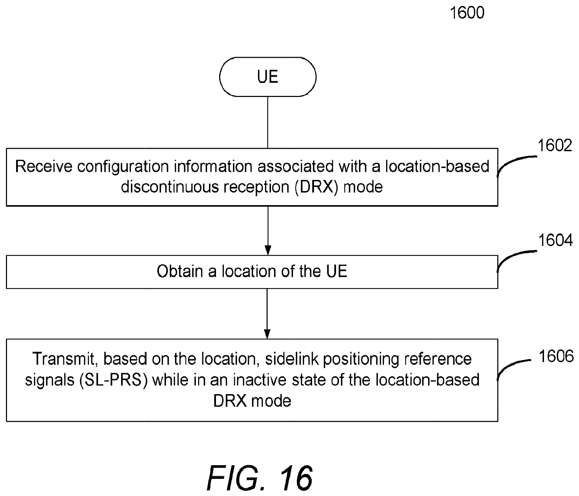

FIG. 16 illustrates an example method 1600 of wireless communication, according to aspects of the disclosure. In an aspect, method 1600 may be performed by a UE (e.g., any of the UE described herein). At 1602, the UE may receive configuration information associated with a location-based discontinuous reception (DRX) mode. In an aspect, operation 1602 may be performed by the one or more transceivers 310-320, the one or more processors 332, memory 340, and/or positioning component 342, any or all of which may be considered means for performing this operation. At 1604, the UE may obtain a location of the UE. In an aspect, operation 1604 may be performed by the one or more transceivers 310-320, the one or more processors 332, memory 340, and/or positioning component 342, any or all of which may be considered means for performing this operation.

At 1606, the UE may transmit, based on the location, sidelink positioning reference signals (SL-PRS) while in an inactive state of a location-based discontinuous reception (DRX) mode. The DRX mode may relate to downlink signals or PDCCH signals. In an aspect, operation 1606 may be performed by the one or more transceivers 310-320, the one or more processors 332, memory 340, and/or positioning component 342, any or all of which may be considered means for performing this operation.

As will be appreciated, a technical advantage of the method 1600 is power saving and increased location awareness.

The location of the UE is based on satellite signals, cellular signals, Wi-Fi signals, sensor information, or any combination thereof. The transmitting of the SL-PRS at 1606 may be associated with a priority status or an on-demand request and a SL-PRS monitoring capability is discontinuous in DRX mode.

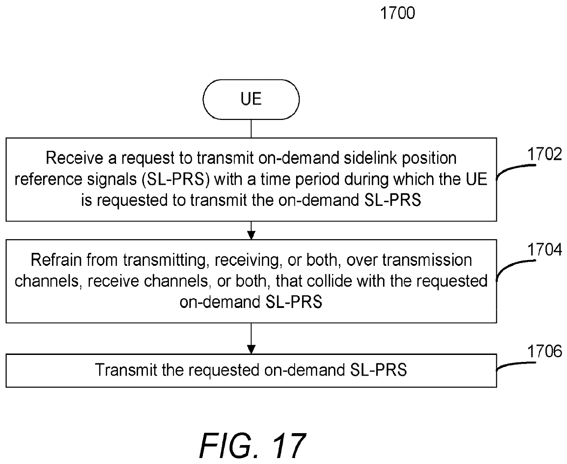

**FIG. 17** illustrates an example method 1700 of wireless communication, according to aspects of the disclosure. In an aspect, method 1700 may be performed by a UE (e.g., any of the UE described herein).

At 1702, the UE may receive a request to transmit on-demand sidelink position reference signals (SL-PRS) with a time period during which the UE is requested to transmit the on-demand SL-PRS. In an aspect, operation 1702 may be performed by the one or more transceivers 310-320, the one or more processors 332, memory 340, and/or positioning component 342, any or all of which may be considered means for performing this operation.

At 1704, the UE may refrain from transmitting, receiving, or both, over transmission channels, receive channels, or both, that collide with the requested on-demand SL-PRS. In an aspect, operation 1704 may be performed by the one or more transceivers 310-320, the one or more processors 332, memory 340, and/or positioning component 342, any or all of which may be considered means for performing this operation.

At 1706, the UE may transmit the requested on-demand SL-PRS. An on-demand SL-PRS request may override a DRX mode or power saving mode for the time period based on the request. The request is received from a location server, a network node, or a second UE. In an aspect, operation 1706 may be performed by the one or more transceivers 310-320, the one or more processors 332, memory 340, and/or positioning component 342, any or all of which may be considered means for performing this operation.

As will be appreciated, a technical advantage of the method 1700 is power saving and increased location awareness.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an electrical insulator and an electrical conductor). Furthermore, it is also intended that aspects of a clause can be included in any other independent clause, even if the clause is not directly dependent on the independent clause.

Implementation examples are described in the following numbered clauses:
Clause 1. A method of wireless communication performed by a user equipment (UE), comprising: receiving a configuration of a first set of sidelink positioning reference signal (SL-PRS) resources configured for transmission by a first set of sidelink UEs including the UE; and determining a sidelink transmission status of a first subset of SL-PRS resources of the first set of SL-PRS resources based on signal strength measurements of the first set of SL-PRS resources, availability information for the first set of SL-PRS resources, or both.
Clause 2. The method of clause 1, wherein the determining further comprises: determining that the sidelink transmission status of the first subset of SL-PRS resources is inactive based on the signal strength measurements for the first subset of SL-PRS resources being below a threshold, and determining that a sidelink transmission status of a second subset of SL-PRS resources is active based on the signal strength measurements for the second subset being above the threshold, wherein the signal strength measurements include a power level, a noise level, or an interference level, or any combination thereof.
Clause 3. The method of clause 2, wherein, the threshold is received from a location server or a base station.
Clause 4. The method of any of clauses 1 to 3, further comprising: reporting the sidelink transmission status of the first subset of SL-PRS resources to at least one additional UE sharing the first set of SL-PRS resources.
Clause 5. The method of any of clauses 1 to 4, wherein the availability information for the first set of SL-PRS resources indicates available SL-PRS resources and conditionally available SL-PRS resources, wherein the available SL-PRS resources are configured to be transmitted, and wherein the conditionally available SL-PRS resources are discontinuous, puncturable, or conditionally active.
Clause 6. The method of any of clauses 1 to 5, wherein at least a portion of the availability information for the first set of SL-PRS resources is received in the configuration.
Clause 7. The method of any of clauses 1 to 6, wherein the availability information for the first set of SL-PRS resources is received from a first UE of the first set of sidelink UEs or a network node, and wherein the availability information for the first set of SL-PRS resources indicates a discontinuous reception (DRX) mode or a power-saving mode of a second UE of the first set of sidelink UEs.
Clause 8. The method of clause 7, wherein the availability information for the first set of SL-PRS resources includes configuration information related to a location-based trigger for the DRX mode or the power-saving mode.
Clause 9. The method of any of clauses 1 to 8, wherein the availability information for the first set of SL-PRS resources is received from a location server or a network node, and comprises criteria for determining time periods during which SL-PRS are configured to be transmitted by at least one other UE of the first set of sidelink UEs, the criteria including a DRX mode configuration of the at least one other UE.
Clause 10. The method of any of clauses 1 to 9, wherein the determining further comprises: determining the sidelink transmission status of the first subset of SL-PRS resources as active or inactive after a defined period of time based on the signal strength measurements detected at the UE.
Clause 11. The method of any of clauses 1 to 10, wherein the sidelink transmission status of the first subset of SL-PRS resources is recorded together with a time stamp.
Clause 12. The method of any of clauses 1 to 11, wherein the determining further comprises: determining the sidelink transmission status of the first subset of SL-PRS resources based on presence or absence of an associated SL-PRS within a defined time period or for a given number of expected transmission instances.
Clause 13. The method of any of clauses 1 to 12, further comprising: transmitting, to the first set of sidelink UEs, a first sidelink transmission status of the UE as active or inactive via inter-UE coordination.
Clause 14. The method of any of clauses 1 to 13, further comprising: allocating, by the UE, a resource pool of the first set of SL-PRS resources based on the sidelink transmission status of the first subset of SL-PRS resources.
Clause 15. The method of any of clauses 1 to 14, further comprising: receiving, at the UE, configuration information associated with a further UE within the first set of sidelink UEs; predicting, at the UE, an SL-PRS availability of the further UE based on the configuration information; and transmitting assistance data (AD), the AD being based on the predicted SL-PRS availability.
Clause 16. The method of clause 15, wherein predicting the SL-PRS availability of the further UE is based on the configuration information and a location of the further UE.
Clause 17. The method of any of clauses 1 to 16, wherein a further UE of the first set of sidelink UEs is configured with a discontinuous reception (DRX) mode, and wherein the UE predicts that the DRX mode is disabled for the further UE at a location based on prior SL-PRS transmissions from the further UE at the location.
Clause 18. The method of any of clauses 1 to 17, further comprising: receiving configuration information associated with a further UE of the first set of sidelink UEs; and reserving SL-PRS resources of a resource pool for the further UE based on configuration information and a priority status of the further UE, wherein the further UE is in an inactive time of a DRX mode.
Clause 19. A method of wireless communication performed by a user equipment (UE), comprising: receiving configuration information associated with a location-based discontinuous reception (DRX) mode; obtaining a location of the UE; and transmitting, based on the location, sidelink positioning reference signals (SL-PRS) while in an inactive state of the location-based DRX mode.
Clause 20. The method of clause 19, wherein the location of the UE is based on satellite signals, cellular signals, Wi-Fi signals, sensor information, or any combination thereof.
Clause 21. The method of any of clauses 19 to 20, wherein the transmitting of the SL-PRS is associated with a priority status or an on-demand request, and wherein a SL-PRS monitoring capability is discontinuous in DRX mode.
Clause 22. A method of wireless communication performed by a user equipment (UE), comprising: receiving a request to transmit on-demand sidelink position reference signals (SL-PRS) with a time period during which the UE is requested to transmit the on-demand SL-PRS; refraining from transmitting, receiving, or both, over transmission channels, receive channels, or both, that collide with the requested on-demand SL-PRS; and transmitting the requested on-demand SL-PRS.
Clause 23. The method of clause 22, wherein the request is received from a location server, a network node, or a second UE.
Clause 24. The method of any of clauses 22 to 23, further comprising: overriding a DRX off cycle for the time period based on the request.
Clause 25. A user equipment (UE), comprising: a memory; at least one transceiver; and at least one processor communicatively coupled to the memory and the at least one transceiver, the at least one processor configured to: receive, via the at least one transceiver, a configuration of a first set of sidelink positioning reference signal (SL-PRS) resources configured for transmission by a first set of sidelink UEs; and determine a sidelink transmission status of a first subset of SL-PRS resources of the first set of SL-PRS resources based on signal strength measurements of the first set of SL-PRS resources, availability information of the first set of SL-PRS resources, or both.
Clause 26. The UE of clause 25, wherein the at least one processor being configured to determine comprises the at least one processor being configured to: determine that the sidelink transmission status of the first subset of SL-PRS resources is inactive based on the signal strength measurements for the first subset of SL-PRS resources being below a threshold, determine that a sidelink transmission status of a second subset of SL-PRS resources is active based on the signal strength measurements for the second subset being above the threshold, wherein the signal strength measurements include a power level, a noise level, or an interference level, or any combination thereof.
Clause 27. The UE of clause 26, wherein the threshold is received from a location server.
Clause 28. The UE of any of clauses 25 to 27, wherein the at least one processor is further configured to: report, via the at least one transceiver, the sidelink transmission status of the first subset of SL-PRS resources to at least one additional UE sharing the first set of SL-PRS resources.
Clause 29. The UE of any of clauses 25 to 28, wherein the availability information for the first set of SL-PRS resources indicates available SL-PRS resources and conditionally available SL-PRS resources wherein the available SL-PRS resources are configured to be transmitted, and wherein the conditionally available SL-PRS resources are discontinuous, puncturable, or conditionally active.
Clause 30. The UE of any of clauses 25 to 29, wherein at least a portion of the availability information for the first set of SL-PRS resources is received in the configuration.
Clause 31. The UE of any of clauses 25 to 30, wherein the availability information for the first set of SL-PRS resources is received from a first UE of the first set of sidelink UEs or a network node, wherein the availability information for the first set of SL-PRS resources indicates a discontinuous reception (DRX) mode or a power-saving mode of a second UE of the first set of sidelink UEs.
Clause 32. The UE of clause 31, wherein the availability information for the first set of SL-PRS resources includes configuration information related to a location-based trigger for the DRX mode or the power-saving mode.
Clause 33. The UE of any of clauses 25 to 32, wherein the availability information for the first set of SL-PRS resources is received from a location server or a network node, and comprises criteria for determining time periods during which SL-PRS are configured to be transmitted by at least one other UE of the first set of sidelink UEs, the criteria including a DRX mode configuration of the at least one other UE.
Clause 34. The UE of any of clauses 25 to 33, wherein the at least one processor being configured to determine comprises the at least one processor being configured to: determine the sidelink transmission status of the first subset of SL-PRS resources as active or inactive after a defined period of time based on the signal strength measurements detected at the UE.
Clause 35. The UE of any of clauses 25 to 34, wherein the sidelink transmission status of the first subset of SL-PRS resources is recorded together with a time stamp.
Clause 36. The UE of any of clauses 25 to 35, wherein the at least one processor being configured to determine comprises the at least one processor being configured to: determine the sidelink transmission status of the first subset of SL-PRS resources based on presence or absence of an associated SL-PRS within a defined time period or for a given number of expected transmission instances.
Clause 37. The UE of any of clauses 25 to 36, further comprising: transmitting, to the first set of sidelink UEs, a first sidelink transmission status of the UE as active or inactive via inter-UE coordination.
Clause 38. The UE of any of clauses 25 to 37, wherein the at least one processor is further configured to: allocate a resource pool of the first set of SL-PRS resources based on the sidelink transmission status of the first subset of SL-PRS resources.
Clause 39. The UE of any of clauses 25 to 38, wherein the at least one processor is further configured to: receive, via the at least one transceiver, at the UE, configuration information associated with a further UE within the first set of sidelink UEs; predict, at the UE, an SL-PRS availability of the further UE based on the configuration information; and transmit, via the at least one transceiver, assistance data (AD), the AD being based on the predicted SL-PRS availability.
Clause 40. The UE of clause 39, wherein the UE predicts the SL-PRS availability of the further UE based on the configuration information and a location of the further UE.
Clause 41. The UE of any of clauses 25 to 40, wherein a further UE of the first set of sidelink UEs is configured with a discontinuous reception (DRX) mode, and wherein the UE predicts that the DRX mode is disabled for the further UE at a location based on prior SL-PRS transmissions from the further UE at the location.
Clause 42. The UE of any of clauses 25 to 41, wherein the at least one processor is further configured to: receive, via the at least one transceiver, configuration information associated with a further UE of the first set of sidelink UEs; and reserve, SL-PRS resources of a resource pool for the further UE based on configuration information and a priority status of the further UE, wherein the further UE is in an inactive time of a DRX mode.
Clause 43. A user equipment (UE), comprising: a memory; at least one transceiver; and at least one processor communicatively coupled to the memory and the at least one transceiver, the at least one processor configured to: receive, via the at least one transceiver, configuration information associated with a location-based discontinuous reception (DRX) mode; obtain a location of the UE; and transmit, via the at least one transceiver, based on the location, sidelink positioning reference signals (SL-PRS) while in an inactive state of the location-based DRX mode.
Clause 44. The UE of clause 43, wherein the location of the UE is based on satellite signals, cellular signals, Wi-Fi signals, sensor information, or any combination thereof.
Clause 45. The UE of any of clauses 43 to 44, wherein the UE transmitting the SL-PRS is associated with a priority status or an on-demand request, and wherein a SL-PRS monitoring capability is discontinuous in DRX mode.
Clause 46. A user equipment (UE), comprising: a memory; at least one transceiver; and at least one processor communicatively coupled to the memory and the at least one transceiver, the at least one processor configured to: receive, via the at least one transceiver, a request to transmit on-demand sidelink position reference signals (SL-PRS) with a time period during which the UE is requested to transmit the on-demand SL-PRS; refrain from transmitting, receiving, or both, over transmission channels, receive channels, or both, that collide with the requested on-demand SL-PRS; and transmit, via the at least one transceiver, the requested SL-PRS.
Clause 47. The UE of clause 46, wherein the request is received from a location server, a network node, or a second UE.
Clause 48. The UE of any of clauses 46 to 47, wherein the at least one processor is further configured to: override a DRX off cycle for the time period based on the request.
Clause 49. A user equipment (UE), comprising: means for receiving a configuration of a first set of sidelink positioning reference signal (SL-PRS) resources configured for transmission by a first set of sidelink UEs including the UE; and means for determining a sidelink transmission status of a first subset of SL-PRS resources of the first set of SL-PRS resources based on signal strength measurements of the first set of SL-PRS resources, availability information for the first set of SL-PRS resources, or both.
Clause 50. The UE of clause 49, wherein the determining further comprises: means for determining that the sidelink transmission status of the first subset of SL-PRS resources is inactive based on the signal strength measurements for the first subset of SL-PRS resources being below a threshold, and means for determining that a sidelink transmission status of a second subset of SL-PRS resources is active based on the signal strength measurements for the second subset being above the threshold, wherein the signal strength measurements include a power level, a noise level, or an interference level, or any combination thereof.
Clause 51. The UE of clause 50, wherein, the threshold is received from a location server or a base station.
Clause 52. The UE of any of clauses 49 to 51, further comprising: means for reporting the sidelink transmission status of the first subset of SL-PRS resources to at least one additional UE sharing the first set of SL-PRS resources.
Clause 53. The UE of any of clauses 49 to 52, wherein the availability information for the first set of SL-PRS resources indicates available SL-PRS resources and conditionally available SL-PRS resources, wherein the available SL-PRS resources are configured to be transmitted, and wherein the conditionally available SL-PRS resources are discontinuous, puncturable, or conditionally active.
Clause 54. The UE of any of clauses 49 to 53, wherein at least a portion of the availability information for the first set of SL-PRS resources is received in the configuration.
Clause 55. The UE of any of clauses 49 to 54, wherein the availability information for the first set of SL-PRS resources is received from a first UE of the first set of sidelink UEs or a network node, and wherein the availability information for the first set of SL-PRS resources indicates a discontinuous reception (DRX) mode or a power-saving mode of a second UE of the first set of sidelink UEs.
Clause 56. The UE of clause 55, wherein the availability information for the first set of SL-PRS resources includes configuration information related to a location-based trigger for the DRX mode or the power-saving mode.
Clause 57. The UE of any of clauses 49 to 56, wherein the availability information for the first set of SL-PRS resources is received from a location server or a network node, and comprises criteria for determining time periods during which SL-PRS are configured to be transmitted by at least one other UE of the first set of sidelink UEs, the criteria including a DRX mode configuration of the at least one other UE.
Clause 58. The UE of any of clauses 49 to 57, wherein the determining further comprises: means for determining the sidelink transmission status of the first subset of SL-PRS resources as active or inactive after a defined period of time based on the signal strength measurements detected at the UE.
Clause 59. The UE of any of clauses 49 to 58, wherein the sidelink transmission status of the first subset of SL-PRS resources is recorded together with a time stamp.
Clause 60. The UE of any of clauses 49 to 59, wherein the determining further comprises: means for determining the sidelink transmission status of the first subset of SL-PRS resources based on presence or absence of an associated SL-PRS within a defined time period or for a given number of expected transmission instances.
Clause 61. The UE of any of clauses 49 to 60, further comprising: means for transmitting, to the first set of sidelink UEs, a first sidelink transmission status of the UE as active or inactive via inter-UE coordination.
Clause 62. The UE of any of clauses 49 to 61, further comprising: means for allocating a resource pool of the first set of SL-PRS resources based on the sidelink transmission status of the first subset of SL-PRS resources.
Clause 63. The UE of any of clauses 49 to 62, further comprising: means for receiving, at the UE, configuration information associated with a further UE within the first set of sidelink UEs; means for predicting, at the UE, an SL-PRS availability of the further UE based on the configuration information; and means for transmitting assistance data (AD), the AD being based on the predicted SL-PRS availability.
Clause 64. The UE of clause 63, wherein predicting the SL-PRS availability of the further UE is based on the configuration information and a location of the further UE.
Clause 65. The UE of any of clauses 49 to 64, wherein a further UE of the first set of sidelink UEs is configured with a discontinuous reception (DRX) mode, and wherein the UE predicts that the DRX mode is disabled for the further UE at a location based on prior SL-PRS transmissions from the further UE at the location.
Clause 66. The UE of any of clauses 49 to 65, further comprising: receiving configuration information associated with a further UE of the first set of sidelink UEs; and reserving SL-PRS resources of a resource pool for the further UE based on configuration information and a priority status of the further UE, wherein the further UE is in an inactive time of a DRX mode.
Clause 67. A UE, comprising: means for receiving configuration information associated with a location-based discontinuous reception (DRX) mode; means for obtaining a location of the UE; and means for transmitting, based on the location, sidelink positioning reference signals (SL-PRS) while in an inactive state of the location-based DRX mode.
Clause 68. The UE of clause 67, wherein the location of the UE is based on satellite signals, cellular signals, Wi-Fi signals, sensor information, or any combination thereof.
Clause 69. The UE of any of clauses 67 to 68, wherein the transmitting of the SL-PRS is associated with a priority status or an on-demand request, and wherein a SL-PRS monitoring capability is discontinuous in DRX mode.
Clause 70. A UE, comprising: means for receiving a request to transmit on-demand sidelink position reference signals (SL-PRS) with a time period during which the UE is requested to transmit the on-demand SL-PRS; means for refraining from transmitting, receiving, or both, over transmission channels, receive channels, or both, that collide with the requested on-demand SL-PRS; and means for transmitting the requested on-demand SL-PRS.
Clause 71. The UE of clause 70, wherein the request is received from a location server, a network node, or a second UE.
Clause 72. The UE of any of clauses 70 to 71, further comprising: means for overriding a DRX off cycle for the time period based on the request.
Clause 73. A non-transitory computer-readable medium storing computer-executable instructions that, when executed by a user equipment (UE), cause the UE to: receive a configuration of a first set of sidelink positioning reference signal (SL-PRS) resources configured for transmission by a first set of sidelink UEs including the UE; and determine a sidelink transmission status of a first subset of SL-PRS resources of the first set of SL-PRS resources based on signal strength measurements of the first set of SL-PRS resources, availability information for the first set of SL-PRS resources, or both.
Clause 74. The non-transitory computer-readable medium of clause 73, wherein the determining further comprises: determine that the sidelink transmission status of the first subset of SL-PRS resources is inactive based on the signal strength measurements for the first subset of SL-PRS resources being below a threshold, and determine that a sidelink transmission status of a second subset of SL-PRS resources is active based on the signal strength measurements for the second subset being above the threshold, wherein the signal strength measurements include a power level, a noise level, or an interference level, or any combination thereof.
Clause 75. The non-transitory computer-readable medium of clause 74, wherein, the threshold is received from a location server or a base station.
Clause 76. The non-transitory computer-readable medium of any of clauses 73 to 75, further comprising computer-executable instructions that, when executed by the UE, cause the UE to: report the sidelink transmission status of the first subset of SL-PRS resources to at least one additional UE sharing the first set of SL-PRS resources.
Clause 77. The non-transitory computer-readable medium of any of clauses 73 to 76, wherein the availability information for the first set of SL-PRS resources indicates available SL-PRS resources and conditionally available SL-PRS resources, wherein the available SL-PRS resources are configured to be transmitted, and wherein the conditionally available SL-PRS resources are discontinuous, puncturable, or conditionally active.
Clause 78. The non-transitory computer-readable medium of any of clauses 73 to 77, wherein at least a portion of the availability information for the first set of SL-PRS resources is received in the configuration.
Clause 79. The non-transitory computer-readable medium of any of clauses 73 to 78, wherein the availability information for the first set of SL-PRS resources is received from a first UE of the first set of sidelink UEs or a network node, and wherein the availability information for the first set of SL-PRS resources indicates a discontinuous reception (DRX) mode or a power-saving mode of a second UE of the first set of sidelink UEs.
Clause 80. The non-transitory computer-readable medium of clause 79, wherein the availability information for the first set of SL-PRS resources includes configuration information related to a location-based trigger for the DRX mode or the power-saving mode.
Clause 81. The non-transitory computer-readable medium of any of clauses 73 to 80, wherein the availability information for the first set of SL-PRS resources is received from a location server or a network node, and comprises criteria for determining time periods during which SL-PRS are configured to be transmitted by at least one other UE of the first set of sidelink UEs, the criteria including a DRX mode configuration of the at least one other UE.
Clause 82. The non-transitory computer-readable medium of any of clauses 73 to 81, wherein the determining further comprises: determine the sidelink transmission status of the first subset of SL-PRS resources as active or inactive after a defined period of time based on the signal strength measurements detected at the UE.
Clause 83. The non-transitory computer-readable medium of any of clauses 73 to 82, wherein the sidelink transmission status of the first subset of SL-PRS resources is recorded together with a time stamp.
Clause 84. The non-transitory computer-readable medium of any of clauses 73 to 83, wherein the determining further comprises: determine the sidelink transmission status of the first subset of SL-PRS resources based on presence or absence of an associated SL-PRS within a defined time period or for a given number of expected transmission instances.
Clause 85. The non-transitory computer-readable medium of any of clauses 73 to 84, further comprising computer-executable instructions that, when executed by the UE, cause the UE to: transmit, to the first set of sidelink UEs, a first sidelink transmission status of the UE as active or inactive via inter-UE coordination.
Clause 86. The non-transitory computer-readable medium of any of clauses 73 to 85, further comprising computer-executable instructions that, when executed by the UE, cause the UE to: allocate a resource pool of the first set of SL-PRS resources based on the sidelink transmission status of the first subset of SL-PRS resources.
Clause 87. The non-transitory computer-readable medium of any of clauses 73 to 86, further comprising computer-executable instructions that, when executed by the UE, cause the UE to: receive, at the UE, configuration information associated with a further UE within the first set of sidelink UEs; predict, at the UE, an SL-PRS availability of the further UE based on the configuration information; and transmit assistance data (AD), the AD being based on the predicted SL-PRS availability.
Clause 88. The non-transitory computer-readable medium of clause 87, wherein predicting the SL-PRS availability of the further UE is based on the configuration information and a location of the further UE.
Clause 89. The non-transitory computer-readable medium of any of clauses 73 to 88, wherein a further UE of the first set of sidelink UEs is configured with a discontinuous reception (DRX) mode, and wherein the UE predicts that the DRX mode is disabled for the further UE at a location based on prior SL-PRS transmissions from the further UE at the location.
Clause 90. The non-transitory computer-readable medium of any of clauses 73 to 89, further comprising computer-executable instructions that, when executed by the UE, cause the UE to: receiving configuration information associated with a further UE of the first set of sidelink UEs; and reserving SL-PRS resources of a resource pool for the further UE based on configuration information and a priority status of the further UE, wherein the further UE is in an inactive time of a DRX mode.
Clause 91. A non-transitory computer-readable medium storing computer-executable instructions that, when executed by a UE, cause the UE to: receive configuration information associated with a location-based discontinuous reception (DRX) mode; obtain a location of the UE; and transmit, based on the location, sidelink positioning reference signals (SL-PRS) while in an inactive state of the location-based DRX mode.
Clause 92. The non-transitory computer-readable medium of clause 91, wherein the location of the UE is based on satellite signals, cellular signals, Wi-Fi signals, sensor information, or any combination thereof.
Clause 93. The non-transitory computer-readable medium of any of clauses 91 to 92, wherein the transmitting of the SL-PRS is associated with a priority status or an on-demand request, and wherein a SL-PRS monitoring capability is discontinuous in DRX mode.
Clause 94. A non-transitory computer-readable medium storing computer-executable instructions that, when executed by a UE, cause the UE to: receive a request to transmit on-demand sidelink position reference signals (SL-PRS) with a time period during which the UE is requested to transmit the on-demand SL-PRS; refrain from transmitting, receiving, or both, over transmission channels, receive channels, or both, that collide with the requested on-demand SL-PRS; and transmit the requested on-demand SL-PRS.
Clause 95. The non-transitory computer-readable medium of clause 94, wherein the request is received from a location server, a network node, or a second UE.
Clause 96. The non-transitory computer-readable medium of any of clauses 94 to 95, further comprising computer-executable instructions that, when executed by the UE, cause the UE to: override a DRX off cycle for the time period based on the request.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

Embodiments of the invention can be described with reference to the following numbered clauses, with preferred features laid out in the dependent clauses:
1. A method of wireless communication performed by a user equipment (UE), comprising:
   receiving a configuration of a first set of sidelink positioning reference signal (SL-PRS) resources configured for transmission by a first set of sidelink UEs including the UE; and
   determining a sidelink transmission status of a first subset of SL-PRS resources of the first set of SL-PRS resources based on signal strength measurements of the first set of SL-PRS resources, availability information for the first set of SL-PRS resources, or both.
2. The method of clause 1, wherein the determining further comprises:
   determining that the sidelink transmission status of the first subset of SL-PRS resources is inactive based on the signal strength measurements for the first subset of SL-PRS resources being below a threshold, and
   determining that a sidelink transmission status of a second subset of SL-PRS resources is active based on the signal strength measurements for the second subset being above the threshold,
   wherein the signal strength measurements include a power level, a noise level, or an interference level, or any combination thereof.
3. The method of clause 2, wherein, the threshold is received from a location server or a base station.
4. The method of clause 1, further comprising:
   reporting the sidelink transmission status of the first subset of SL-PRS resources to at least one additional UE sharing the first set of SL-PRS resources.
5. The method of clause 1, wherein the availability information for the first set of SL-PRS resources indicates available SL-PRS resources and conditionally available SL-PRS resources, wherein the available SL-PRS resources are configured to be transmitted, and wherein the conditionally available SL-PRS resources are discontinuous, puncturable, or conditionally active.
6. The method of clause 1, wherein at least a portion of the availability information for the first set of SL-PRS resources is received in the configuration.
7. The method of clause 1, wherein the availability information for the first set of SL-PRS resources is received from a first UE of the first set of sidelink UEs or a network node, and
   wherein the availability information for the first set of SL-PRS resources indicates a discontinuous reception (DRX) mode or a power-saving mode of a second UE of the first set of sidelink UEs.
8. The method of clause 7, wherein the availability information for the first set of SL-PRS resources includes configuration information related to a location-based trigger for the DRX mode or the power-saving mode.
9. The method of clause 1, wherein the availability information for the first set of SL-PRS resources is received from a location server or a network node, and comprises criteria for determining time periods during which SL-PRS are configured to be transmitted by at least one other UE of the first set of sidelink UEs, the criteria including a DRX mode configuration of the at least one other UE.
10. The method of clause 1, wherein the determining further comprises:
   determining the sidelink transmission status of the first subset of SL-PRS resources as active or inactive after a defined period of time based on the signal strength measurements detected at the UE.
11. The method of clause 1, wherein the sidelink transmission status of the first subset of SL-PRS resources is recorded together with a time stamp.
12. The method of clause 1, wherein the determining further comprises:
   determining the sidelink transmission status of the first subset of SL-PRS resources based on presence or absence of an associated SL-PRS within a defined time period or for a given number of expected transmission instances.
13. The method of clause 1, further comprising:
   transmitting, to the first set of sidelink UEs, a first sidelink transmission status of the UE as active or inactive via inter-UE coordination.
14. The method of clause 1, further comprising:
   allocating, by the UE, a resource pool of the first set of SL-PRS resources based on the sidelink transmission status of the first subset of SL-PRS resources.
15. The method of clause 1, further comprising:
   receiving, at the UE, configuration information associated with a further UE within the first set of sidelink UEs;
   predicting, at the UE, an SL-PRS availability of the further UE based on the configuration information; and
   transmitting assistance data (AD), the AD being based on the predicted SL-PRS availability.
16. The method of clause 15, wherein predicting the SL-PRS availability of the further UE is based on the configuration information and a location of the further UE.
17. The method of clause 1, wherein a further UE of the first set of sidelink UEs is configured with a discontinuous reception (DRX) mode, and
   wherein the UE predicts that the DRX mode is disabled for the further UE at a location based on prior SL-PRS transmissions from the further UE at the location.
18. The method of clause 1, further comprising:
   receiving configuration information associated with a further UE of the first set of sidelink UEs; and
   reserving SL-PRS resources of a resource pool for the further UE based on configuration information and a priority status of the further UE,
   wherein the further UE is in an inactive time of a DRX mode.
19. A method of wireless communication performed by a user equipment (UE), comprising:
   receiving configuration information associated with a location-based discontinuous reception (DRX) mode;
   obtaining a location of the UE; and
   transmitting, based on the location, sidelink positioning reference signals (SL-PRS) while in an inactive state of the location-based DRX mode.
20. The method of clause 19, wherein the location of the UE is based on satellite signals, cellular signals, Wi-Fi signals, sensor information, or any combination thereof.
21. The method of clause 19, wherein the transmitting of the SL-PRS is associated with a priority status or an on-demand request, and wherein a SL-PRS monitoring capability is discontinuous in DRX mode.
22. A method of wireless communication performed by a user equipment (UE), comprising:
   receiving a request to transmit on-demand sidelink position reference signals (SL-PRS) with a time period during which the UE is requested to transmit the on-demand SL-PRS;
   refraining from transmitting, receiving, or both, over transmission channels, receive channels, or both, that collide with the requested on-demand SL-PRS; and
   transmitting the requested on-demand SL-PRS.
23. The method of clause 22, wherein the request is received from a location server, a network node, or a second UE.
24. The method of clause 22, further comprising:
   overriding a DRX off cycle for the time period based on the request.
25. A user equipment (UE), comprising:
   a memory;
   at least one transceiver; and
   at least one processor communicatively coupled to the memory and the at least one transceiver, the at least one processor configured to:
      receive, via the at least one transceiver, a configuration of a first set of sidelink positioning reference signal (SL-PRS) resources configured for transmission by a first set of sidelink UEs; and
      determine a sidelink transmission status of a first subset of SL-PRS resources of the first set of SL-PRS resources based on signal strength measurements of the first set of SL-PRS resources, availability information of the first set of SL-PRS resources, or both.
26. The UE of clause 25, wherein the at least one processor being configured to determine comprises the at least one processor being configured to:
   determine that the sidelink transmission status of the first subset of SL-PRS resources is inactive based on the signal strength measurements for the first subset of SL-PRS resources being below a threshold,
   determine that a sidelink transmission status of a second subset of SL-PRS resources is active based on the signal strength measurements for the second subset being above the threshold,
   wherein the signal strength measurements include a power level, a noise level, or an interference level, or any combination thereof.
27. The UE of clause 26, wherein the threshold is received from a location server.
28. The UE of clause 25, wherein the at least one processor is further configured to:
   report, via the at least one transceiver, the sidelink transmission status of the first subset of SL-PRS resources to at least one additional UE sharing the first set of SL-PRS resources.
29. The UE of clause 25, wherein the availability information for the first set of SL-PRS resources indicates available SL-PRS resources and conditionally available SL-PRS resources wherein the available SL-PRS resources are configured to be transmitted, and wherein the conditionally available SL-PRS resources are discontinuous, puncturable, or conditionally active.
30. The UE of clause 25, wherein at least a portion of the availability information for the first set of SL-PRS resources is received in the configuration.
31. The UE of clause 25, wherein the availability information for the first set of SL-PRS resources is received from a first UE of the first set of sidelink UEs or a network node,
   wherein the availability information for the first set of SL-PRS resources indicates a discontinuous reception (DRX) mode or a power-saving mode of a second UE of the first set of sidelink UEs.
32. The UE of clause 31, wherein the availability information for the first set of SL-PRS resources includes configuration information related to a location-based trigger for the DRX mode or the power-saving mode.
33. The UE of clause 25, wherein the availability information for the first set of SL-PRS resources is received from a location server or a network node, and comprises criteria for determining time periods during which SL-PRS are configured to be transmitted by at least one other UE of the first set of sidelink UEs, the criteria including a DRX mode configuration of the at least one other UE.
34. The UE of clause 25, wherein the at least one processor being configured to determine comprises the at least one processor being configured to:
   determine the sidelink transmission status of the first subset of SL-PRS resources as active or inactive after a defined period of time based on the signal strength measurements detected at the UE.
35. The UE of clause 25, wherein the sidelink transmission status of the first subset of SL-PRS resources is recorded together with a time stamp.
36. The UE of clause 25, wherein the at least one processor being configured to determine comprises the at least one processor being configured to:
   determine the sidelink transmission status of the first subset of SL-PRS resources based on presence or absence of an associated SL-PRS within a defined time period or for a given number of expected transmission instances.
37. The UE of clause 25, further comprising:
   transmitting, to the first set of sidelink UEs, a first sidelink transmission status of the UE as active or inactive via inter-UE coordination.
38. The UE of clause 25, wherein the at least one processor is further configured to:
   allocate a resource pool of the first set of SL-PRS resources based on the sidelink transmission status of the first subset of SL-PRS resources.
39. The UE of clause 25, wherein the at least one processor is further configured to:
   receive, via the at least one transceiver, at the UE, configuration information associated with a further UE within the first set of sidelink UEs;
   predict, at the UE, an SL-PRS availability of the further UE based on the configuration information; and
   transmit, via the at least one transceiver, assistance data (AD), the AD being based on the predicted SL-PRS availability.
40. The UE of clause 39, wherein the UE predicts the SL-PRS availability of the further UE based on the configuration information and a location of the further UE.
41. The UE of clause 25, wherein a further UE of the first set of sidelink UEs is configured with a discontinuous reception (DRX) mode, and
   wherein the UE predicts that the DRX mode is disabled for the further UE at a location based on prior SL-PRS transmissions from the further UE at the location.
42. The UE of clause 25, wherein the at least one processor is further configured to:
   receive, via the at least one transceiver, configuration information associated with a further UE of the first set of sidelink UEs; and
   reserve, SL-PRS resources of a resource pool for the further UE based on configuration information and a priority status of the further UE,
   wherein the further UE is in an inactive time of a DRX mode.
43. A user equipment (UE), comprising:
   a memory;
   at least one transceiver; and
   at least one processor communicatively coupled to the memory and the at least one transceiver, the at least one processor configured to:
      receive, via the at least one transceiver, configuration information associated with a location-based discontinuous reception (DRX) mode;
      obtain a location of the UE; and
      transmit, via the at least one transceiver, based on the location, sidelink positioning reference signals (SL-PRS) while in an inactive state of the location-based DRX mode.
44. The UE of clause 43, wherein the location of the UE is based on satellite signals, cellular signals, Wi-Fi signals, sensor information, or any combination thereof.
45. The UE of clause 43, wherein the UE transmitting the SL-PRS is associated with a priority status or an on-demand request, and wherein a SL-PRS monitoring capability is discontinuous in DRX mode.
46. A user equipment (UE), comprising:
   a memory;
   at least one transceiver; and
   at least one processor communicatively coupled to the memory and the at least one transceiver, the at least one processor configured to:
      receive, via the at least one transceiver, a request to transmit on-demand sidelink position reference signals (SL-PRS) with a time period during which the UE is requested to transmit the on-demand SL-PRS;
      refrain from transmitting, receiving, or both, over transmission channels, receive channels, or both, that collide with the requested on-demand SL-PRS; and
      transmit, via the at least one transceiver, the requested SL-PRS.
47. The UE of clause 46, wherein the request is received from a location server, a network node, or a second UE.
48. The UE of clause 46, wherein the at least one processor is further configured to:
   override a DRX off cycle for the time period based on the request.
49. A user equipment (UE), comprising:
   means for receiving a configuration of a first set of sidelink positioning reference signal (SL-PRS) resources configured for transmission by a first set of sidelink UEs; and
   means for determining a sidelink transmission status of a first subset of SL-PRS resources based on signal strength measurements of the first set of SL-PRS resources, availability information of the first set of SL-PRS resources, or both.
50. A user equipment (UE), comprising:
   means for receiving configuration information associated with a location-based discontinuous reception (DRX) mode;
   means for obtaining a location of the UE; and
   means for transmitting, based on the location, sidelink positioning reference signals (SL-PRS) while in an inactive state of the location-based DRX mode.
51. A user equipment (UE), comprising:
   means for receiving a request to transmit on-demand sidelink position reference signals (SL-PRS) with a time period during which the UE is requested to transmit the on-demand SL-PRS;
   means for refraining from transmitting, receiving, or both, over transmission channels, receive channels, or both, that collide with the requested on-demand SL-PRS; and
   means for transmitting the requested on-demand SL-PRS.
52. A non-transitory computer-readable medium storing computer-executable instructions that, when executed by a user equipment (UE), cause the UE to:
   receive a configuration of a first set of sidelink positioning reference signal (SL-PRS) resources configured for transmission by a first set of sidelink UEs; and
   determine a sidelink transmission status of a first subset of SL-PRS resources based on signal strength measurements of the first set of SL-PRS resources, availability information of the first set of SL-PRS resources, or both.
53. A non-transitory computer-readable medium storing computer-executable instructions that, when executed by a user equipment (UE), cause the UE to:
   receive configuration information associated with a location-based discontinuous reception (DRX) mode;
   obtain a location of the UE; and
   transmit, based on the location, sidelink positioning reference signals (SL-PRS) while in an inactive state of the location-based DRX mode.
54. A non-transitory computer-readable medium storing computer-executable instructions that, when executed by a user equipment (UE), cause the UE to:
   receive a request to transmit on-demand sidelink position reference signals (SL-PRS) with a time period during which the UE is requested to transmit the on-demand SL-PRS;
   refrain from transmitting, receiving, or both, over transmission channels, receive channels, or both, that collide with the requested on-demand SL-PRS; and transmit the requested on-demand SL-PRS.

## Claims

1. A method (1700) of wireless communication performed by a user equipment, UE, comprising:
receiving (1702) a request to transmit on-demand sidelink position reference signals, SL-PRS, with a time period during which the UE is requested to transmit the on-demand SL-PRS;
refraining (1704) from transmitting, receiving, or both, over transmission channels, receive channels, or both, that collide with the requested on-demand SL-PRS; and
transmitting (1706) the requested on-demand SL-PRS.

2. The method of claim 1, wherein the request is received from a location server, a network node, or a second UE.

3. The method of claim 1, further comprising:
overriding a DRX off cycle for the time period based on the request.

4. A user equipment, UE, comprising:
a memory;
at least one transceiver; and
at least one processor communicatively coupled to the memory and the at least one transceiver, the at least one processor configured to:
receive (1702), via the at least one transceiver, a request to transmit on-demand sidelink position reference signals, SL-PRS, with a time period during which the UE is requested to transmit the on-demand SL-PRS;
refrain (1704) from transmitting, receiving, or both, over transmission channels, receive channels, or both, that collide with the requested on-demand SL-PRS; and
transmit (1706), via the at least one transceiver, the requested SL-PRS.

5. The UE of claim 4, further configured to perform the method of any of claims 2 to 3.

6. A non-transitory computer-readable medium storing computer-executable instructions that, when executed by a user equipment, UE, cause the UE to perform the method of any of claims 1 to 3.
